# EUROPEAN PATENT APPLICATION

(11) **EP 4 064 429 A1**
(43) Date of publication of application: **28.09.2022**
(21) Application number: 20889219.0
(22) Date of filing: 19.11.2020
(51) Int. Cl.: H01M 50/20, H01M 10/613, H01M 10/625, H01M 10/651, H01M 10/6563, H01M 10/658, H01M 10/659, H01M 50/147

(54) **THERMALLY EXPANDABLE FIREPROOF MATERIAL FOR BATTERY PACK, FIREPROOF SHEET FOR BATTERY PACK, AND ON-VEHICLE BATTERY PACK**

(30) Priority: 20.11.2019 JP 2019209451; 31.03.2020 JP 2020064623
(71) Applicant: SEKISUI CHEMICAL CO., LTD., Osaka-shi Osaka 530-8565 (JP)
(72) Inventor: MIYATA, Shingo, Hasuda-shi, Saitama 349-0198 (JP); DOHI, Akihito, Hasuda-shi, Saitama 349-0198 (JP); SHIMAMOTO, Michio, Hasuda-shi, Saitama 349-0198 (JP); NAKAJIMA, Hideyasu, Hasuda-shi, Saitama 349-0198 (JP)
(74) Representative: Ter Meer Steinmeister & Partner
(86) International application number: PCT/JP2020/043222
(87) International publication number: WO 2021/100813

(57) **Abstract**

There are provided a thermally expandable fire-resistant material for battery pack and a fire-resistant sheet for battery pack, which have high flame retardancy and thermal insulation properties to thermal runaway and ignition of on-vehicle batteries. The thermally expandable fire-resistant material for battery pack is one to be used for a battery pack to be mounted on vehicles, and contains a resin and a thermally expandable compound, and has an expansion ratio in a case where heated at 600°C of 2.5 times or more.

## Description

### Technical Field

The present invention relates to thermally expandable fire-resistant materials for battery pack to be used for battery packs, particularly to a thermally expandable fire-resistant material for battery pack, a fire-resistant sheet for battery pack and an on-vehicle battery pack to be used for battery packs to be mounted on vehicles.

### Background Art

Due to recent year's awareness of energy saving and environmental issues, hybrid vehicles and electric vehicles using batteries have been paid attention to. In this case, the batteries are usually mounted on battery packs and vehicles are driven by obtaining power from the battery packs.

The battery pack has a battery module constituted of a plurality of battery cells and a battery case housing the battery module. The plurality of battery cells in the battery pack are disposed in a stacked manner in order to obtain a high output.

In various types of batteries typified by lithium batteries, there may occur thermal runaway and ignition caused by internal short-circuit, overcharge, external foreign matter penetration, external overheat, abnormal heat generation, and the like; this is a problem particularly in the field of electric vehicles using high-output lithium ion batteries. Therefore, it can be said that the fire resistance, the heat resistance not permitting heat generated to diffuse outside, and the like, of battery cells and battery packs, are remarkably important factors affecting safety.

For example, Patent Literature 1 discloses a battery cell at least a part of the outside of which is covered with a fire-resistant coating, wherein the fire-resistant coating is an ablative coating, an expandable coating or an endothermic coating, and a polyurethane-based coating can be used.

### Citation List

### Patent Literature

PTL1: Japanese Translation of PCT International Application Publication No. 2013-528911

### Summary of Invention

### Technical Problem

The fire-resistant coating of Patent Literature 1 is, however, one to be used for batteries, and when ignition occurs, cannot hold its shape and cannot be expected to exhibit sufficient fire resistance and thermal insulation properties for vehicular applications.

Therefore, the present invention has an object to provide a thermally expandable fire-resistant material for battery pack and a fire-resistant sheet for battery pack, which have high flame retardancy and thermal insulation properties to thermal runaway and ignition of an on-vehicle battery. The present invention further provides an on-vehicle battery pack capable of exhibiting high flame retardancy and thermal insulation properties when the thermally expandable fire-resistant material for battery pack or the fire-resistant sheet for battery pack is used for the on-vehicle battery pack.

### Solution to Problem

As a result of exhaustive studies, the present inventors have found that by using a thermally expandable compound for a thermally expandable fire-resistant material for battery pack to be used for a battery pack to be mounted on vehicles and making the expansion ratio of the fire-resistant material to be a certain value or higher, high flame retardancy and thermal insulation properties can be exhibited; and this finding has led to the completion of the following present invention. That is, the present invention has the following [1] to [11] as its gist.
[1] A thermally expandable fire-resistant material for battery pack to be used for a battery pack, comprising a resin and a thermally expandable compound, an expansion ratio thereof in a case where the material is heated at 600°C being 2.5 times or more.
[2] The thermally expandable fire-resistant material for battery pack according to [1], wherein the thermally expandable compound is at least one selected from the group consisting of thermally expandable layered inorganic substances and thermally expandable solid phosphorus compounds.
[3] The thermally expandable fire-resistant material for battery pack according to [1] or [2], comprising a solid flame retardant other than the thermally expandable compound.
[4] The thermally expandable fire-resistant material for battery pack according to any one of [1] to [3], wherein the resin is at least one selected from the group consisting of polyvinyl acetal resins, acrylic resins, polyvinyl chloride resins, polyolefin resins and epoxy resins.
[5] The thermally expandable fire-resistant material for battery pack according to any one of [1] to [4], further comprising an endothermic agent having an initial thermal decomposition temperature of 800°C or lower and an endothermic quantity of 300 J/g or higher.
[6] A fire-resistant sheet for battery pack, comprising a sheet of a thermally expandable fire-resistant material for battery pack according to any one of [1] to [5].
[7] The fire-resistant sheet for battery pack according to [6], comprising the sheet of the thermally expandable fire-resistant material for battery pack, and a base material.
[8] The fire-resistant sheet for battery pack according to [6] or [7], comprising an electroconductive layer.
[9] An on-vehicle battery pack, comprising: a battery cell-housing part having a bottom plate having a plurality of battery cells mounted thereon and a side plate standing on the periphery of the bottom plate; and a lid part provided on the upper end of the side plate of the battery cell-housing part so as to face the bottom plate, the lid part provided with a thermally expandable fire-resistant material layer and a base layer from the side near to the bottom plate; and the thermally expandable fire-resistant material layer comprising a thermally expandable fire-resistant material for battery pack according to any one of [1] to [5] or a fire-resistant sheet for battery pack according to any one of [6] to [8].
[10] The on-vehicle battery pack according to [9], wherein the thermally expandable fire-resistant material layer has a thickness of 5 mm or smaller.
[11] The on-vehicle battery pack according to [9] or [10], wherein the base layer is either of a metal layer and a resin layer having a thickness of 0.2 to 5.0 mm.

### Advantageous Effects of Invention

According to the present invention, there can be provided a thermally expandable fire-resistant material for battery pack and a fire-resistant sheet for battery pack, which have high flame retardancy and thermal insulation properties to thermal runaway and ignition of on-vehicle batteries. There can further be provided an on-vehicle battery pack capable of exhibiting high flame retardancy and thermal insulation properties when the thermally expandable fire-resistant material for battery pack or the fire-resistant sheet for battery pack is used for the on-vehicle battery pack.

### Brief Description of Drawings

[Fig. 1] Fig. 1 is a schematic cross-sectional view according to an embodiment of a laminated fire-resistant sheet for battery pack.
[Fig. 2] Fig. 2 is a schematic cross-sectional view according to an embodiment of a laminated fire-resistant sheet for battery pack.
[Fig. 3] Fig. 3 is a schematic cross-sectional view according to an embodiment of a laminated fire-resistant sheet for battery pack.
[Fig. 4] Fig. 4 is a schematic cross-sectional view according to an embodiment of a laminated fire-resistant sheet for battery pack.
[Fig. 5] Fig. 5 is a schematic cross-sectional view according to an embodiment of a laminated fire-resistant sheet for battery pack.
[Fig. 6] Fig. 6 is a schematic cross-sectional view according to an embodiment of a laminated fire-resistant sheet for battery pack.
[Fig. 7] Fig. 7 is a schematic cross-sectional view according to an embodiment of a laminated fire-resistant sheet for battery pack.
[Fig. 8] Fig. 8 is a schematic cross-sectional view according to an embodiment of a laminated fire-resistant sheet for battery pack.
[Fig. 9] Fig. 9 is a schematic cross-sectional view according to an embodiment of a laminated fire-resistant sheet for battery pack.
[Fig. 10] Fig. 10 is a schematic cross-sectional view according to an embodiment of an on-vehicle battery pack.
[Fig. 11] Fig. 11 is a schematic cross-sectional view according to another embodiment of an on-vehicle battery pack.

### Description of Embodiments

Hereinafter, the present invention will be described in detail by way of embodiments.

### [The thermally expandable fire-resistant material for battery pack, and the fire-resistant sheet for battery pack]

The thermally expandable fire-resistant material (hereinafter, referred to simply as "fire-resistant material" in some cases) of the present invention comprises a resin and a thermally expandable compound. The fire-resistant material of the present invention, due to comprising the thermally expandable compound, is expanded on being heated by thermal runaway and the like of a battery, and thereby insulates heat, whereby ignition can be suppressed and in the case of occurrence of ignition, good thermal insulation properties can be exhibited. Further, due to that the expansion blocks combustion paths, high flame retardancy is exhibited. On the other hand, the fire-resistant material, since usually before being heated, being thin, can easily be disposed on an inner surface of a battery pack having much spatial restriction.

In the fire-resistant material of the present invention, the expansion ratio in a case where the fire-resistant material is heated at 600°C becomes 2.5 times or more. When the expansion ratio becomes less than 2.5 times, even if the fire-resistant material is heated to a high temperature by thermal runaway and the like of a battery, the fire-resistant material cannot expand sufficiently, making it difficult to exhibit the ignition suppressing effect and the thermal insulation performance. In order to sufficiently exhibit the ignition suppressing effect and the thermal insulation performance even when the thickness of the fire-resistant material of the present invention is thinner, the expansion ratio is preferably 5 times or more, more preferably 10 times or more and still more preferably 20 times or more.

On the other hand, the expansion ratio of the fire-resistant material is preferably 100 times or less and more preferably 50 times or less. The expansion ratio not more than these upper limit values can provide a suitable content of the thermally expandable compound and allow in a certain amount of the resin becomes to be included in the fire-resistant material, easily providing good mechanical strength to the fire-resistant material. Further, it easily provides good hardness to an expansion residue after expansion and easily produces a fire-resistant material excellent in fire resistance, thermal insulation properties and the like.

Here, the expansion ratio is calculated, as described in Examples described later, by dividing a thickness of an expansion residue after expansion when the fire-resistant material is heated at 600°C for 3 min by a thickness of the fire-resistant material before the expansion. When the fire-resistant material is heated, the fire-resistant material may be placed and heated in a holder sufficiently larger in height than the thickness of the fire-resistant material, and when the fire-resistant material is placed in the holder, the fire-resistant material may be cut after the size of the holder.

Hereinafter, each component to be used for the fire-resistant material will be described in detail.

### <Resin>

The resin to be used for the fire-resistant material includes thermoplastic resins, thermosetting resins and elastomer resins. Examples of the thermoplastic resins include synthetic resins, such as polyolefin resins, polyester resins such as polyethylene terephthalate, polystyrene resins, acrylonitrile-butadiene-styrene (ABS) resins, polyvinyl acetal resins, polyvinyl alcohol resins, polycarbonate resins, polyphenylene ether resins, acrylic resins, polyamide resins, polyvinyl chloride resins (PVC), novolac resins, polyurethane resins and polyisobutylene.

Examples of the thermosetting resins include synthetic resins, such as epoxy resins, urethane resins, phenol resins, urea resins, melamine resins, unsaturated polyester resins and polyimide.

The elastomer resins include acrylonitrile butadiene rubber (NBR), ethylene-propylene-diene rubber (EPDM), ethylene-propylene rubber, natural rubber, polybutadiene rubber, polyisoprene rubber, styrene-butadiene block copolymers, hydrogenated styrene-butadiene block copolymers, hydrogenated styrene-butadiene-styrene block copolymers, hydrogenated styrene-isoprene block copolymers and hydrogenated styrene-isoprene-styrene block copolymers.

In the present invention, these resins may be used singly or as a mixture of two or more.

It is preferable that the resin is at least one selected from the group consisting of polyvinyl chloride resins, polyolefin resins, polyvinyl acetal resins, acrylic resins and epoxy resins. Among these, from the viewpoint of securing formability by extrusion, polyvinyl chloride resins and polyolefin resins are preferable.

Also, more preferable is at least one selected from the group consisting of polyvinyl acetal resins and acrylic resins, and still more preferable are polyvinyl acetal resins, from the viewpoint of easily securing formability and mechanical strengths such as tensile strength even if additives such as the thermally expandable compound are blended in a relatively large amount.

It is preferable that the melt flow rate of the thermoplastic resin such as polyvinyl chloride resins and polyolefin reins is 1.0 g/10 min or higher. When the melt flow rate of the thermoplastic resin is 1.0 g/10 min or higher, the thermally expandable compound as well as a solid flame retardant and an endothermic agent described later exhibit good dispersing abilities, and even if these are blended in a large amount, sheet formability in extrusion and the like can be retained well. The melt flow rate is more preferably 2.4 g/10 min or higher, still more preferably 10 g/10 min or higher and further still more preferably 20 g/10 min or higher. The melt flow rate not lower than these lower limit values improves the dispersing abilities of the thermally expandable compound, the solid flame retardant, the endothermic agent and the like, thereby easily blending these in a large amount.

The melt flow rate of the thermoplastic resin is preferably 40 g/10 min or lower and more preferably 35 g/10 min or lower.

Here, the melt flow rate is measured according to JIS K7210-2:1999 under the condition of 190°C and a load of 2.16 g.

### (Polyolefin resin)

The polyolefin resins include polypropylene resins, polyethylene resins, poly(1-)butene resins, polypentene resins and ethylene-vinyl acetate copolymer (EVA) resins, but among these, ethylene-vinyl acetate copolymer (EVA) resins are preferable.

The ethylene-vinyl acetate copolymer resin may be a non-crosslinkable ethylene-vinyl acetate copolymer resin or may also be a high temperature-crosslinkable ethylene-vinyl acetate copolymer resin. Further as the ethylene-vinyl acetate copolymer resin, there can also be used modified ethylene-vinyl acetate resins such as saponified ethylene-vinyl acetate copolymers and hydrolyzates of ethylene-vinyl acetate.

In the ethylene-vinyl acetate copolymer resin, the content of vinyl acetate measured according to JIS K6730, "Testing Methods for Ethylene/Vinyl Acetate Copolymer Materials", is preferably 10 to 50% by mass and more preferably 25 to 45% by mass. The vinyl acetate content not lower than these lower limit values enhances the adhesivity with additives such as the thermally expandable compound. On the other hand, the vinyl acetate content not higher than these upper limit values provides good mechanical strength such as breaking strength to the fire-resistant resin layer.

### (Polyvinyl chloride resin)

The polyvinyl chloride resin may be a vinyl chloride homopolymer, or may be a vinyl chloride-based copolymer. The vinyl chloride-based copolymer is a copolymer of vinyl chloride with a monomer having an unsaturated bond copolymerizable with vinyl chloride, and contains 50% by mass or more of a constitutional unit derived from vinyl chloride.

Examples of the monomer having an unsaturated bond copolymerizable with vinyl chloride include vinyl esters such as vinyl acetate and vinyl propionate, acrylate esters such as acrylic acid, methacrylic acid, methyl acrylate and ethyl acrylate, methacrylate esters such as methyl methacrylate and ethyl methacrylate, olefins such as ethylene and propylene, aromatic vinyls such as acrylonitrile and styrene, and vinylidene chloride.

The polyvinyl chloride resin may be a polychlorinated vinyl chloride resin obtained by chlorinating a vinyl chloride homopolymer, a vinyl chloride-based copolymer, or the like.

The polyvinyl chloride resin used here may be only one of the above or a combination of two or more.

### (Polyvinyl acetal resin)

The polyvinyl acetal resin is not especially limited as long as being one obtained by acetalizing a polyvinyl alcohol with an aldehyde, but polybutyral resins are suitable. Use of a polyvinyl butyral enables the mechanical strength to be enhanced even in the case where the amount of the resin in the fire-resistant material is relatively small. Hence, even if the thickness of the fire-resistant material is made thin, a certain mechanical strength can be secured.

The hydroxyl group content of the polyvinyl acetal resin is preferably 20 to 40% by mol. The hydroxyl group content of 20% by mol or higher enhances the polarity of the polyvinyl alcohol resin and the adhesive strength to the thermally expandable compound, the solid flame retardant, the endothermic agent and the like, thereby easily improving the mechanical strength. On the other hand, the hydroxyl group content of 40% by mol or lower prevents a decrease in the mechanical strength such as the tensile strength of the fire-resistant material due to excessive hardening. The hydroxyl group content is more preferably 22% by mol or higher. The hydroxyl group content is more preferably 37% by mol or lower, still more preferably 35% by mol or lower and further still more preferably 33% by mol or lower.

The degree of acetalization of the polyvinyl acetal resin is preferably 40 to 80% by mol. Setting the degree of acetalization in the above range brings the hydroxyl group content described above into the desired range, thereby easily improving the mechanical strength of the fire-resistant material. The degree of acetalization is more preferably 55% by mol or higher, still more preferably 65% by mol or higher and further still more preferably 67% by mol or higher, and more preferably 76% by mol or lower.

The acetyl group content of the polyvinyl acetal resin is preferably 0.1 to 30% by mol. The acetyl group content in this range provides excellent moisture resistance to the fire-resistant material, and brings the hydroxyl group content described above into the desired range, thereby easily improving the mechanical strength of the fire-resistant material. From these viewpoints, the acetyl group content is more preferably 0.2% by mol or higher and still more preferably 0.5% by mol or higher, and is more preferably 15% by mol or lower and still more preferably 7% by mol or lower.

Here, the degree of acetalization, the hydroxyl group content, and the acetyl group content can be measured and calculated, for example, by methods according to JIS K6728 "Testing Methods for Polyvinyl Butyral".

The degree of polymerization of the polyvinyl acetal resin is preferably 200 to 3,000. The degree of polymerization in this range can suitably disperse the thermally expandable compound, the solid flame retardant, the endothermic agent and the like in the fire-resistant material. The degree of polymerization is more preferably 250 or higher and still more preferably 300 or higher.

When the degree of polymerization of the polyvinyl acetal resin is made low, the viscosity also decreases and it becomes easy for the thermally expandable compound, the solid flame retardant, the endothermic agent and the like to be dispersed in the fire-resistant material, and the mechanical strength of the fire-resistant material is improved. From such a viewpoint, the degree of polymerization of the polyvinyl acetal resin is more preferably 1,500 or lower, still more preferably 1,000 or lower and further still more preferably 900 or lower.

The degree of polymerization of the polyvinyl acetal resin refers to a viscosity-average polymerization degree measured based on a method described in JIS K6728.

The viscosity of a 10-mass% ethanol/toluene solution of the polyvinyl acetal resin is preferably 5 mPa·s or higher, more preferably 10 mPa·s or higher and still more preferably 15 mPa·s or higher. Further, the viscosity of the 10-mass% ethanol/toluene solution is preferably 500 mPa·s or lower, more preferably 300 mPa·s or lower and still more preferably 200 mPa·s or lower. The viscosity of 10-mass% ethanol/toluene solution of the polyvinyl acetal resin as described above easily disperse the thermally expandable compound, the solid flame retardant, the endothermic agent and the like in the fire-resistant material, and improves the mechanical strength of the fire-resistant material.

Here, the viscosity of the 10-mass% ethanol/toluene solution is a value measured as follows. 150 ml of an ethanol/toluene (weight ratio: 1:1) mixed solvent is put in an Erlenmeyer flask, to which a weighed sample is then added so that the resin concentration becomes 10% by mass, and shaken to be dissolved in a 20°C thermostatic chamber. The solution is held at 20°C, and the viscosity is measured using a BM-type viscometer, whereby the viscosity of the 10-mass% ethanol/toluene solution can be determined.

The aldehyde is not especially limited, but generally, aldehydes having 1 to 10 carbon atoms are suitably used. The aldehydes having 1 to 10 carbon atoms are not especially limited, and examples thereof include n-butylaldehyde, isobutylaldehyde, n-valeraldehyde, 2-ethylbutylaldehyde, n-hexylaldehyde, n-octylaldehyde, n-nonylaldehyde, n-decylaldehyde, formaldehyde, acetaldehyde and benzaldehyde. Among these, n-butylaldehyde, n-hexylaldehyde and n-valeraldehyde are preferable, and n-butylaldehyde is more preferable. These aldehydes may be used singly or concurrently in two or more.

### (Acrylic resin)

The acrylic resin is a polymer, for example, by polymerizing monomer components including an alkyl (meth)acrylate monomer. In the present description, the "alkyl (meth)acrylate" means an "alkyl acrylate or an "alkyl methacrylate". The same applies to other analogous terms.

The alkyl (meth)acrylate monomer in the present invention is an ester of (meth)acrylic acid and an aliphatic alcohol, and the number of carbon atoms in the alkyl group of the aliphatic alcohol is, for example, 1 to 18, preferably 1 to 14, more preferably 1 to 10 and still more preferably 1 to 8.

Specific examples of the alkyl (meth)acrylate monomer include methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, pentyl (meth)acrylate, hexyl (meth)acrylate, heptyl (meth)acrylate, 2-ethylhexyl (meth)acrylate, n-octyl (meth)acrylate, isooctyl (meth)acrylate, nonyl (meth)acrylate, decyl (meth)acrylate, undecyl (meth)acrylate, dodecyl (meth)acrylate, tridecyl (meth)acrylate and tetradecyl (meth)acrylate.

These alkyl (meth)acrylate monomers may be used singly or in a combination of two or more.

The monomer components for obtaining the acrylic resin may include a polar group-containing monomer in addition to the alkyl (meth)acrylate monomer described above.

Examples of the polar group-containing monomer include carboxylic acids containing a vinyl group, such as (meth)acrylic acid and itaconic acid, vinyl monomers having a hydroxyl group, such as 2-hydroxyethyl (meth)acrylate, 2-hydroxypropyl (meth)acrylate, 4-hydroxybutyl (meth)acrylate, caprolactone-modified (meth)acrylate, polyoxyethylene (meth)acrylate and polyoxypropylene (meth)acrylate, and nitrogen-containing vinyl monomers such as (meth)acrylonitrile, N-vinylpyrrolidone, N-vinylcaprolactam, N-vinyllaurolactam, (meth)acryloylmorpholine, (meth)acrylamide, dimethyl(meth)acrylamide, N-methylol (meth)acrylamide, N-butoxymethyl(meth)acrylamide and dimethylaminomethyl (meth)acrylate.

It is preferable that the glass transition temperature (Tg) of the acrylic resin is 5 to 80°C. The glass transition temperature (Tg) in this range can impart a certain mechanical strength to the fire-resistant material, while having good formability, flexibility and the like. From these viewpoints, the glass transition temperature (Tg) of the acrylic resin is preferably 15 to 70°C and more preferably 25 to 60°C. Here, the glass transition temperature (Tg) of the acrylic resin can be adjusted by suitably selecting the type and amount of the monomer component to be used.

Here, the glass transition temperature (Tg) of the acrylic resin can be measured, for example, by a differential scanning calorimetric analyzer (DSC).

As the acrylic resin, a polymer from an alkyl (meth)acrylate monomer is preferable. Specifically, preferable is a polymer from an alkyl (meth)acrylate monomer whose alkyl group has 1 to 14 carbon atoms; more preferable is a polymer from an alkyl (meth)acrylate monomer whose alkyl group has 1 to 10 carbon atoms; and still more preferable is a polymer from an alkyl (meth)acrylate monomer whose alkyl group has 1 to 8 carbon atoms. The acrylic resin may be a homopolymer of an alkyl (meth)acrylate monomer, or may be a copolymer of two or more alkyl (meth)acrylate monomers. Specific suitable acrylic resins include homopolymers of isobutyl methacrylate and copolymers of isobutyl methacrylate and methyl methacrylate. The acrylic resin may be used singly or concurrently in two or more.

The weight-average molecular weight of the acrylic resin is preferably 10,000 to 300,000, from the viewpoint that the thermally expandable compound, the solid flame retardant, the endothermic agent and the like can suitably be dispersed in the fire-resistant material and the mechanical strength of the fire-resistant material is improved. From these viewpoints, the weight-average molecular weight of the acrylic resin is more preferably 30,000 to 250,000 and still more preferably 60,000 to 200,000. Here, the weight-average molecular weight of the acrylic resin is a weight-average molecular weight in terms of standard polystyrene measured by gel permeation chromatography (GPC). Examples of columns in measurement of the weight-average molecular weight by GPC include Shodex LF-804 (manufactured by Showa Denko K.K).

### (Epoxy resin)

The epoxy resin to be used in the present invention is not especially limited, but examples thereof include resins composed of epoxy compound only and resins composed of an epoxy compound as their base resin and a curing agent. The epoxy compound is a compound having an epoxy group(s), and specific examples thereof include glycidyl ether type and glycidyl ester type. The glycidyl ether type may be bifunctional or may be tri- or more polyfunctional. That is applied to the glycidyl ester type, too. The epoxy compound, in order to adjust the crosslinking degree, may contain a monofunctional one. Among these, bifunctional glycidyl ether-type epoxy compounds are preferable.

Examples of the bifunctional glycidyl ether-type epoxy compounds include alkylene glycol type such as polyethylene glycol type and polypropylene glycol type, and aliphatic epoxy compounds such as neopentyl glycol type, 1,6-hexanediol type and hydrogenated bisphenol A type. The examples further include aromatic epoxy compounds having an aromatic ring(s), such as bisphenol A type, bisphenol F type, bisphenol AD type, ethylene oxide-bisphenol A type and propylene oxide-bisphenol A type. Among these, preferable are aromatic epoxy compounds such as bisphenol A type and bisphenol F type.

Examples of the glycidyl ester-type epoxy compounds include hexahydrophthalic anhydride-type, tetrahydrophthalic anhydride-type, dimer acid-type and p-oxybenzoic acid-type epoxy compounds.

Examples of the tri- or more polyfunctional glycidyl ether-type epoxy compounds include phenol novolac type, orthocresol novolac type, DPP novolac type and dicyclopentadiene·phenol type.

These epoxy compounds may be used singly or concurrently in two or more.

As the curing agent, polyaddition type and catalyst type are used. Examples of the polyaddition-type curing agent include polyamine-based curing agents, acid anhydride-based curing agents, polyphenol-based curing agents and polymercaptan. Examples of the catalyst-type curing agent include tertiary amines, imidazols and Lewis acid complexes. These curing agents may be used singly or concurrently in two or more.

The content of the resin in the fire-resistant material is, based on the total amount of the fire-resistant material, for example, 5 to 90% by mass, preferably 10 to 85% by mass, more preferably 30 to 75% by mass, still more preferably 40 to 65% by mass and most preferably 45 to 60% by mass. When the content is not less than any one of these lower limit values, the dispersing abilities of the thermally expandable compound, the solid flame retardant, the endothermic agent and the like are improved, easily enhancing the mechanical strength of the fire-resistant material, such as the tensile strength, and the formability thereof. Further when it is not more than the upper limit values, it becomes easy to improve the thermal insulation performance.

### <Thermally expandable compound>

The thermally expandable compound to be used in the present invention is a compound which expands to certain times or more by being heated so that the expansion ratio of the fire-resistant material becomes the above-mentioned predetermined value or higher.

The degree of expansion of the thermally expandable compound is preferably 5 ml/g or higher. A suitable amount of the thermally expandable compound with the degree of expansion of 5 ml/g or higher can provide the expansion ratio of the fire-resistant material of the above-mentioned predetermined value or higher. From the viewpoint of improving the fire resistance and the thermal insulation performance, the degree of expansion of the thermally expandable compound is more preferably 20 ml/g or higher, still more preferably 100 ml/g or higher and further still more preferably 150 ml/g or higher. Further, the degree of expansion of the thermally expandable compound is preferably 400 ml/g or lower, more preferably 300 ml/g or lower and still more preferably 250 ml/g or lower. The degree of expansion of the thermally expandable compound not higher than these upper limit values easily enhances the mechanical strength of the expansion residue.

In the thermally expandable compound to be used in the present invention, the initial expansion temperature is preferably 95°C or higher. When the initial expansion temperature is 95°C or higher, the fire-resistant material can be prevented from expanding accidentally other than when a battery causes runaway or causes ignition. From these viewpoints, the initial expansion temperature of the thermally expandable compound is more preferably 105°C or higher and still more preferably 115°C or higher. On the other hand, the initial expansion temperature of the thermally expandable compound suffices if being lower than 600°C so that the fire-resistant material can expand at 600°C, but is preferably 450°C or lower. The initial expansion temperature of 450°C or lower can expand quickly the fire-resistant material when the battery causes thermal ignition or thermal runaway, thereby enhancing the fire resistance and the thermal insulation performance. Further, from the viewpoint of enhancing the fire resistance by quick expansion in the thermal runaway, the initial expansion temperature is more preferably 200°C or lower and still more preferably 140°C or lower.

Here, the initial expansion temperature of the thermally expandable compound is a temperature at which when the thermally expandable compound is heated from 25°C at a temperature-rise rate of 5°C/min, the thermally expandable compound expands to a volume 1.1 times or more a volume thereof before the temperature-rise starts. The temperature intervals at which the volume of the thermally expandable compound is measured are not especially limited, and the volume may be measured, for example, at every 5°C rise. The degree of expansion refers to a volume (ml) per unit mass (g) of the thermally expandable compound after being held at 1,000°C for 10 s.

It is preferable that the thermally expandable compound to be used in the present invention is at least one selected from the group consisting of thermally expandable layered inorganic substances, thermally expandable solid phosphorus compounds and thermally expandable microcapsules. Among these, more preferable is at least one selected from the group consisting of thermally expandable layered inorganic substances and thermally expandable solid phosphorus compounds; and still more preferable is use of at least a thermally expandable layered inorganic substance. Further, the thermally expandable compound may be a combination of at least one selected from the group consisting of thermally expandable layered inorganic substances and thermally expandable solid phosphorus compounds with a thermally expandable microcapsule.

A combination of at least one of a thermally expandable layered inorganic substance and a thermally expandable solid phosphorus compound with a thermally expandable microcapsule can stepwise more improve the fire resistance and the thermal insulation properties. That is, on the low-temperature side, expansion is carried out by the thermally expandable microcapsule to impart the flame retardancy and the thermal insulation properties; and further on the high-temperature side, further expansion is carried out by the thermally expandable layered inorganic substance or the thermally expandable solid phosphorus compound, whereby the flame retardancy and the thermal insulation properties can be more improved stepwise.

### (Thermally expandable layered inorganic substance)

The thermally expandable layered inorganic substance is a conventionally well-known substance which expands in heating, and examples thereof include vermiculite and thermally expandable graphite, and among these, thermally expandable graphite is preferable. The thermally expandable layered inorganic substance used here may be granular or flake. In the thermally expandable layered inorganic substance, in particular, the thermally expandable graphite, the degree of expansion, as described above, can be made high (for example, 100 ml/g or higher and further, 150 ml/g or higher), and large-volume pores can be formed in thermal expansion. Further, the initial expansion temperature can be made low (for example, 200°C or lower, and further, 140°C or lower). Hence, the fire resistance and the thermal insulation performance of the fire-resistant material can be made excellent.

The thermally expandable graphite is a graphite intercalation compound produced by treating a powder of natural flake graphite, thermally decomposable graphite, Kish graphite or the like with an inorganic acid and a strong oxidizing agent, and is one type of crystalline compounds that maintain the layered structure of carbon. The inorganic acid includes concentrated sulfuric acid, nitric acid and selenic acid. The strong oxidizing agent includes concentrated nitric acid, persulfate salts, perchloric acid, perchlorate salts, permanganate salts, bichromic acid, bichromate salts and hydrogen peroxide. The thermally expandable graphite thus obtained by acid treatment as described above may further be neutralized with ammonia, an aliphatic lower amine, an alkali metal compound, an alkaline earth metal compound, or the like.

The particle size of the thermally expandable graphite is preferably 20 to 200 mesh. When the particle size of the expandable graphite is in the above range, since it becomes easy for large-volume pores to be formed by expansion, the fire resistance is improved. Further, the dispersing ability thereof into the resin is also improved.

The average aspect ratio of the thermally expandable graphite is preferably 2 or higher, more preferably 5 or higher and still more preferably 10 or higher. The upper limit of the average aspect ratio of the thermally expandable graphite is not especially limited, but is, from the viewpoint of preventing breaking of the thermally expandable graphite, preferably 1,000 or lower. When the average aspect ratio of the thermally expandable graphite is 2 or higher, since it becomes easy for large-volume pores to be formed by expansion, the flame retardancy is improved.

The average aspect ratio of the thermally expandable graphite is determined by measuring the maximum dimension (length) and the minimum dimension (breadth) for each of ten particles of the thermally expandable graphite, dividing the maximum dimension (length) by the minimum dimension (breadth) for each particle to obtain an aspect ratio for each particle, and averaging the aspect ratios for the 10 particles. The length and the breadth of the thermally expandable graphite can be measured, for example, by using a field emission scanning electron microscope (FE-SEM).

### (Thermally expandable solid phosphorus compound)

The thermally expandable solid phosphorus compound is a compound which is a solid at room temperature (25°C) and atmospheric pressure (1 atm), has a phosphorus atom(s) and has a degree of expansion of 5 ml/g or higher. The degree of expansion of the thermally expandable solid phosphorus compound is preferably 20 ml/g or higher.

The degree of expansion of the thermally expandable solid phosphorus compound suffices if being the above-mentioned upper limit value or lower, but usually is lower than that of the thermally expandable layered inorganic substance and typically is 100 ml/g or lower. The thermally expandable solid phosphorus compound has flame retardancy since it has a phosphorus atom(s), thereby easily providing good thermal insulation performance and fire resistance. In addition, as described later, a combined use thereof with the thermally expandable layered inorganic substance easily retains the expansion residue in a mesh state, and easily improves the thermal insulation performance and the fire resistance.

The thermally expandable solid phosphorus compound includes metal salts of lower phosphorus acids and having a degree of expansion of 5 ml/g or higher as described above. The "lower phosphorus acids" refer to inorganic phosphorus acids which have not been condensed, that is, polymerized, among inorganic phosphorus acids. That is, the inorganic phosphorus acids have one phosphorus atom in their molecule. The lower phosphorus acids include primary phosphoric acid, secondary phosphoric acid, tertiary phosphoric acid, metaphosphoric acid, phosphorous acid and hypophophorous acid. A metal to be used for the metal salts may be any of alkaline metals, alkaline earth metals, periodical table 3B-group metals and transition metals. Among these, the metal salt of the lower phosphorus acid is typically a metal salt of phosphorous acid, and is specifically aluminum phosphite. Aluminum phosphite becomes high in the degree of expansion and makes it easy for the fire resistance and the thermal insulation properties to be improved.

The thermally expandable compound may be used singly or concurrently in two or more.

### (Thermally expandable microcapsule)

The thermally expandable microcapsule includes a volatile substance such as a low-boiling point solvent inside an outer shell resin, and since on being heated, the outer shell resin is softened and the included volatile substance is volatilized or expanded, the outer shell is expanded by a pressure by the volatilization or expansion and the particle diameter becomes large. Since the thermally expandable microcapsule exhibits a thermal insulation effect by cells formed after expansion of the thermally expandable microcapsule, a further improvement of the thermal insulation properties can be anticipated.

It is preferable that the outer shell of the thermally expandable microcapsule is formed of a thermoplastic resin. As the thermoplastic resin, there can be used one or two or more selected from the group consisting of vinyl polymers of ethylene, styrene, vinyl acetate, vinyl chloride, vinylidene chloride, acrylonitrile, butadiene, chloroprene or the like, copolymers thereof, polyamides such as nylon 6 and nylon 66, and polyesters such as polyethylene terephthalate. Among these, a copolymer of acrylonitrile is preferable from the viewpoint that the included volatile substance hardly permeates the outer shell. As the volatile substance included in the inside of the thermally expandable microcapsule, there is used one or two or more low-boiling point liquids selected from the group consisting of hydrocarbons having 3 to 7 carbon atoms, such as propane, propylene, butene, normal butane, isobutane, isopentane, neopentane, normal pentane, hexane and heptane, halides of methane, such as methyl chloride and methylene chloride, chlorofluorocarbons such as CCl₃F and CCl₂F₂, tetraalkylsilanes such as tetramethylsilane and trimethylethylsilane, and petroleum ethers.

Suitable examples of the thermally expandable microcapsule include microcapsules having, as an outer shell resin, a copolymer of acrylonitrile with vinylidene chloride, and having a hydrocarbon having 3 to 7 carbon atoms, such as isobutene, included therein.

In the case of using the thermally expandable microcapsule, especially preferable is concurrent use of the above-mentioned thermally expandable solid phosphorus compound and at least one selected from the group consisting of solid flame retardants described later. The thermally expandable microcapsule, in the concurrent use therewith, holds an expanded state even at a high temperature and when being heated at 600°C, can attain a high expansion ratio.

In one embodiment of the present invention, more preferable is use of both of the thermally expandable layered inorganic substance and the thermally expandable solid phosphorus compound. When as the thermally expandable compound, both of these compounds are used, it becomes easy for the expansion residue to be held in a mesh state and the fire-resistant material, while diffusing flammable gas and fire outside, can thermally insulate heat, giving excellent thermal insulation properties and fire resistance. In the present invention, from these viewpoints, it is especially preferable to use a combination of the thermally expandable graphite with aluminum phosphite.

The content of the thermally expandable compound is preferably 10 to 1,500 parts by mass with respect to 100 parts by mass of the resin. The content of 10 parts by mass or higher can provide the expansion ratio of the fire-resistant material of a predetermined value or higher. On the other hand, the content of 1,500 parts by mass or lower easily provides good mechanical strength and formability to the fire-resistant material and good mechanical strength to the expansion residue after expansion.

From these viewpoints, the content of the thermally expandable compound is more preferably 20 parts by mass or higher, still more preferably 40 parts by mass or higher and further still more preferably 50 parts by mass or higher, and more preferably 500 parts by mass or lower, still more preferably 250 parts by mass or lower and further still more preferably 130 parts by mass or lower.

As described above, in one embodiment of the present invention, although it is preferable to use both of the thermally expandable layered inorganic substance and the thermally expandable solid phosphorus compound, in the case of using both, the content of these is, in the above content range, more preferably 40 parts by mass or higher, still more preferably 50 parts by mass or higher and further still more preferably 80 parts by mass or higher. Further, the content is more preferably 500 parts by mass or lower, still more preferably 250 parts by mass or lower and further still more preferably 130 parts by mass or lower.

Further, the mass ratio of contents of these (thermally expandable layered inorganic substance/thermally expandable solid phosphorus compound) is preferably 2/8 to 8/2, more preferably 3/7 to 7/3 and still more preferably 4/6 to 6/4. The ratios in these ranges easily retain high hardness of the expansion residue in a mesh state, thereby further improving the fire resistance and the thermal insulation properties.

### <Solid flame retardant>

It is preferable that the fire-resistant material of the present invention contains a solid flame retardant other than the thermally expandable compound. The solid flame retardant is a flame retardant which is solid at room temperature and atmospheric pressure. The solid flame retardant includes low-melting glasses, phosphorus compounds other than the thermally expandable solid phosphorus compound, and nitrogen-containing flame retardants such as melamine-based compounds and cyclic urea compounds.

As the solid flame retardant, one selected from these may be used, or two or more thereof may be used. Due to that the fire-resistant material of the present invention contains, in addition to the above-mentioned thermally expandable compound, the solid flame retardant, it becomes easy for the expansion residue to be held in a mesh state and the fire-resistant material, while diffusing flammable gas and fire outside, can insulate heat, giving thermal insulation properties and fire resistance made good.

### (Low-melting glass)

The low-melting glass to be used as the solid flame retardant is softened and brought into a melt state on being heated and acts as an inorganic binder, and has an effect of improving the mechanical strength of the fire-resistant material. The low-melting glass specifically means a glass which is softened or melted at a temperature of 1,000°C or lower; and the softening temperature of the low-melting glass is preferably 200 to 900°C, more preferably 300 to 800°C and still more preferably 300 to 600°C. Here, the softening temperature is, for example, a value measured from an inflection point in DTA.

The low-melting glass includes glasses composed of oxygen and at least one element selected from the group consisting of silicon, aluminum, boron, phosphorus, zinc, iron, copper, titanium, vanadium, zirconium, tungsten, molybdenum, thallium, antimony, tin, cadmium, arsenic, lead, alkaline metals, alkaline earth metals, halogens and chalcogens, and may be used singly or concurrently in two or more kinds. The low-melting glass is preferably a granular one, such as glass frit.

Commercially available products of the low-melting glass are trade name "4020" (aluminum phosphate salt-based low-melting glass, softening temperature: 380°C), manufactured by Nihon Horo Yuyaku Co., Ltd., trade name "4706" (borosilicate salt-based low-melting glass, softening temperature: 610°C), manufactured by Nihon Horo Tuyaku Co., Ltd., trade name "FF209" (lithium borate salt-based low-melting glass, softening temperature: 450°C), manufactured by AGC Techno Glass Co., Ltd., and the like.

### (Phosphorus compound)

The phosphorus compound to be used as the solid flame retardant is a compound having a phosphorus atom(s), and examples thereof include polyphosphate compounds. The polyphosphate compounds include ammonium polyphosphate and polyphosphoric acid amide; and among these, ammonium polyphosphate is preferable. Further, there may also be used metal salts of lower phosphoric acids having a degree of expansion of lower than 5 ml/g.

### (Nitrogen-containing flame retardant)

The nitrogen-containing flame retardant is a flame retardant having a nitrogen atom(s), and includes melamine-based compounds and cyclic urea compounds. The nitrogen-containing flame retardant may further contain a phosphorus atom(s) as long as, as described later, being a flame retardant having a fundamental skeleton containing a nitrogen atom(s), such as a melamine skeleton and a cyclic urea.

The melamine-based compound includes compounds having a melamine skeleton or a skeleton of a melamine derivative such as melame or meleme. The melamine-based compound specifically includes melamine pyrophosphate, melamine orthophosphate, melamine·melame·meleme polyphosphate double salts, melamine polymetaphosphate, melamine sulfate, melame pyrosulfate, melame organosulfonate, melamine organosulfonate, melamine organophosphinate, melamine isocyanurate and melamine borate.

The solid flame retardant is, among the above-mentioned, preferably at least one selected from the group consisting of low-melting glasses, polyphosphate compounds, melamine-based compounds and cyclic urea compounds, and more preferably at least one selected from the group consisting of low-melting glasses and polyphosphate compounds. By using these, the expansion residue is held in a mesh state and the hardness of the expansion residue is enhanced, easily improving the thermal insulation properties and the fire resistance.

A specific suitable compound of the solid flame retardant is at least one selected from the group consisting of low-melting glasses, ammonium polyphosphate, polyphosphoric acid amide, melamine pyrophosphate, melamine orthophosphate, melamine·melame·meleme polyphosphate double salts, melamine polymetaphosphate, melamine sulfate, melame pyrosulfate, melame organosulfonate, melamine organosulfonate, melamine organophosphinate, melamine isocyanurate and melamine borate, more preferably at least one selected from the group consisting of low-melting glasses and ammonium polyphosphate, and especially preferably ammonium polyphosphate.

The cyclic urea compound includes ethylene urea (2-imidazolidinone), propylene urea (tetrahydro-2-pyrimidine), hydantoin (2,5-imidazolidinedione), cyanuric acid [1,3,5-triazine-2,4,6(1H,3H,5H)-trione], and violuric acid [5-(hdroxyimino)pyrimidine-2,4,6(1H,3H,5H)-trione],

The content of the solid flame retardant in the fire-resistant material is preferably 10 to 1,000 parts by mass with respect to 100 parts by mass of the resin. The content of 10 parts by mass or higher easily retain the expansion residue of the fire-resistant material in a mesh state, thereby diffusing flammable gas and fire outside to improve the fire resistance and the thermal insulation properties. On the other hand, the content of 1,000 parts by mass or lower easily provides good mechanical strength and formability to the fire-resistant material. Further, the content in the above range can enhance the hardness of the expansion residue, easily providing excellent thermal insulation properties and fire resistance. From these viewpoints, the content of the solid flame retardant is more preferably 20 parts by mass or higher and still more preferably 40 parts by mass or higher, and more preferably 500 parts by mass or lower, still more preferably 150 parts by mass or lower and further still more preferably 100 parts by mass or lower.

Further, the mass ratio of the solid flame retardant to the thermally expandable compound (solid flame retardant/thermally expandable compound) is preferably 2/8 to 8/2, more preferably 3/7 to 7/3 and still more preferably 4/6 to 6/4. The mass ratios in these ranges provide good mechanical strength to the expansion residue in a mesh state and further improve easily the fire resistance and the thermal insulation properties.

When the fire-resistant material contains the solid flame retardant, containing only either one of the thermally expandable layered inorganic substance and the thermally expandable solid phosphorus compound as the thermally expandable compound can attain sufficient fire resistance and thermal insulation performance, although both of the thermally expandable layered inorganic substance and the thermally expandable solid phosphorus compound may be included.

An especially preferable combination in the case where the fire-resistant material contains the solid flame retardant is use of a thermally expandable graphite as the thermally expandable compound and, as the solid flame retardant, at least one selected from the group consisting of polyphosphate compounds and low-melting glasses. Alternatively, there are used, as the expandable compound, a lower phosphoric acid such as aluminum phosphite, and as the solid flame retardant, at least one selected from the group consisting of polyphosphate compounds.

In the case where the fire-resistant material contains the thermally expandable compound and the solid flame retardant, the total amount of the thermally expandable compound and the solid flame retardant in the fire-resistant material is, with respect to 100 parts by mass of the resin, preferably 20 to 1,500 parts by mass, more preferably 50 to 1,000 parts by mass, still more preferably 80 to 300 parts by mass and further still more preferably 80 to 130 parts by mass. The total amount of the thermally expandable compound and the solid flame retardant of the above lower limit value or higher easily improves the thermal insulation properties and the fire resistance of the fire-resistant material. On the other hand, the total amount of the above upper limit value or lower easily improves the mechanical strength and formability of the fire-resistant material.

### <Endothermic agent>

The fire-resistant material of the present invention may further contain an endothermic agent. The endothermic agent includes endothermic agents having an initial thermal decomposition temperature of 800°C or lower and an endothermic quantity of 300 J/g or higher. When in the endothermic agent, one of the initial thermal decomposition temperature and the endothermic quantity falls within the above range, in the case where a battery or the like ignites, the fire-resistant material can quickly insulate heat, and the thermal insulation properties and the like can be made much better.

The initial thermal decomposition temperature of the endothermic agent is preferably 500°C or lower, more preferably 400°C or lower and still more preferably 300°C or lower. The initial thermal decomposition temperature of the endothermic agent not higher than these upper limit values quickly decomposes the endothermic agent in ignition and enables quick thermal insulation. On the other hand, the initial thermal decomposition temperature of the endothermic agent is, for example, 50°C or higher, preferably 100°C or higher, more preferably 150°C or higher and still more preferably 180°C or higher.

Here, the initial thermal decomposition temperature can be measured by a thermogravimetric differential thermal analyzer (TG-DTA), and specifically, can be measured by a method described in Examples.

The endothermic quantity of the endothermic agent is preferably 500 J/g or higher, more preferably 600 J/g or higher and still more preferably 900 J/g or higher. When the endothermic quantity of the endothermic agent is in the above range, since the endothermic property is improved, the fire resistance is more improved. The endothermic quantity of the endothermic agent is usually 4,000 J/g or lower, preferably 3,000 J/g or lower and more preferably 2,000 J/g or lower.

Here, the edothermic quantity can be measured by a thermogravimetric differential thermal analyzer (TG-DTA), and specifically, can be measured by a method described in Examples.

It is preferable that the endothermic agent has an average particle diameter of 0.1 to 90 µm. The average particle diameter in the above range can disperse the endothermic agent homogeneously in the resin, thereby enabling blending of a large amount thereof. From these viewpoints, the average particle diameter of the endothermic agent is more preferably 0.5 to 60 µm, still more preferably 0.8 to 40 µm and further still more preferably 0.8 to 10 µm. The average particle diameter of the endothermic agent in the above range can improve the dispersing ability of the endothermic agent in the fire-resistant material, thereby dispersing the endothermic agent homogeneously in the resin, increasing the amount of the endothermic agent to be blended in the resin, or attaining the like.

The endothermic agent is not especially limited as long as meeting the above-mentioned initial thermal decomposition temperature and endothermic quantity, but a hydrated metal compound preferably can be used. The hydrated metal compound is a compound which is decomposed by heating and generates steam and has an effect of absorbing heat and extinguishing fire.

The hydrated metal compound includes metal hydroxides and hydrates of metal salts, and among these, metal hydroxides are preferable. Combinations of a metal hydroxide with a hydrate of a metal salt are also preferable. By using the metal hydroxide, it becomes easy for the fire extinguishing performance to be improved.

Examples of the metal hydroxide include aluminum hydroxide, magnesium hydroxide, calcium hydroxide and hydrotalcite. Examples of the hydrate of the metal salt include a hydrate of zinc borate represented by 2ZnO·3B₂O₅·3.5H₂O, and hydrates of metal sulfate salts such as hydrates of calcium sulfate (for example, dihydrate) and hydrates of magnesium sulfate (for example, heptahydrate). The endothermic agent also includes kaolin clay, dawsonite and boehmite. Further, the endothermic agent may be calcium aluminate, talc or the like.

As the endothermic agent, among the above-mentioned, preferable are aluminum hydroxide, magnesium hydroxide, calcium hydroxide, a hydrate of zinc borate, hydrates of calcium sulfate (for example, dihydrate) and hydrates of magnesium sulfate (for example, heptahydrate); and among these, aluminum hydroxide and magnesium hydroxide are more preferable.

In the present invention, the content of the endothermic agent is, with respect to 100 parts by mass of the resin, preferably 10 to 500 parts by mass. The content of the endothermic agent of 10 parts by mass or higher makes it easy to improve the fire extinguishing performance because it is contained. On the other hand, the content of 500 parts by mass or lower makes it easy to homogeneously disperse the endothermic agent in the resin, thereby providing good formability and mechanical strength of the fire-resistant material. From these viewpoints, the content of the endothermic agent is more preferably 40 parts by mass or higher and still more preferably 80 parts by mass or higher, and more preferably 400 parts by mass or lower and still more preferably 200 parts by mass or lower.

Further, the mass ratio of the content of the endothermic agent to the total amount of the thermally expandable compound and the solid flame retardant (content of endothermic agent/total amount of the thermally expandable compound and the solid flame retardant) is preferably 2/8 to 8/2, more preferably 3/7 to 7/3 and still more preferably 4/6 to 6/4. The mass ratios in these ranges can attain a good balance between retention of the mechanical strength of the fire-resistant material and improvement of the fire extinguishing performance of the endothermic agent.

### <Inorganic filler>

The fire-resistant material of the present invention may further contain inorganic fillers other than the above-mentioned thermally expandable compound, solid flame retardant and endothermic agent. Such inorganic fillers are not especially limited, and examples thereof include metal oxides such as alumina, zinc oxide, titanium oxide, calcium oxide, magnesium oxide, iron oxide, tin oxide, antimony oxide and ferrite, metal compounds other than hydrated metal compounds, such as calcium carbonate, glass fibers, aluminum nitride, boron nitride, silicon nitride, carbon black, graphite, carbon fibers, charcoal powder, various metal powders, silicon carbide, stainless steel fibers, various magnetic powders, slag fibers, flyash, and dehydrated sludge. These inorganic fillers may be used singly or in a combination of two or more.

The average particle diameter of the inorganic filler is preferably 0.5 to 100 µm and more preferably 1 to 50 µm. At a high content of the inorganic filler, from the viewpoint of improving the dispersing ability, it is preferable that the inorganic filler has a small particle diameter; and at a high content, it is preferable that the inorganic filler has a large particle diameter, because the viscosity of a fire-resistant resin composition becomes higher and the formability becomes lower with the progress of higher filling.

In the case where the fire-resistant material of the present invention contains the inorganic filler, the content thereof is, with respect to 100 parts by mass of the resin, preferably 10 to 300 parts by mass and more preferably 10 to 200 parts by mass. When the content of the inorganic filler is in the above range, there can be improved the mechanical strength, the formability and the like of the fire-resistant material.

### <Plasticizer>

The fire-resistant material of the present invention may further contain a plasticizer. In particular, in the case where the resin is a thermoplastic resin such as a polyvinyl chloride resin or a polyvinyl acetal resin, from the viewpoint of improving the formability and the like, a plasticizer may be contained.

The plasticizer is not especially limited as long as being a plasticizer generally used concurrently with a polyvinyl chloride resin or a polyvinyl acetal resin. Specific examples thereof include phthalate ester plasticizers such as di-2-ethylhexyl phthalate (DOP), dibutyl phthalate (DBP), diheptyl phthalate (DHP) and diisodecyl phthalate (DIDP), fatty acid esters such as di-2-ethylhexyl adipate (DOA), diisobutyl adipate (DIBA) and dibutyl adipate (DBA), epoxidized ester plasticizers such as epoxidized soybean oils, adipate ester plasticizers such as adipate esters and adipate polyesters, trimellitate ester plasticizers such as tri-2-ethylhexyl trimellitate (TOTM) and triisononyl trimellitate (TINTM), and process oils such as mineral oils. The plasticizer may be used singly or in a combination of two or more.

In the case where the fire-resistant material of the present invention contains the plasticizer, the content of the plasticizer is, with respect to 100 parts by mass of the resin, preferably 1 to 60 parts by mass, more preferably 5 to 50 parts by mass and still more preferably 10 to 40 parts by mass. When the content of the plasticizer is in the above range, the formability is likely to be improved and a fire-resistant resin layer becoming too soft can be suppressed.

### <Other components>

The fire-resistant material of the present invention, as required, can contain components to be added other than the above components in such a range not to impair the object of the present invention. The types of the components to be added are not especially limited, and various types of additives can be used. Examples of such additives include lubricants, shrinkage-preventing agents, crystal nucleating agents, colorants (pigments, dyes and the like), ultraviolet absorbents, antioxidizing agents, antiaging agents, flame retardant aids, antistatic agents, surfactants, vulcanizing agents, dispersants and surface-treating agents. The amount of the additives to be added can suitably be selected in the range of not impairing the formability and the like, and the additives may be used singly or in a combination of two or more.

### (Fire-resistant sheet for battery pack)

It is preferable that the fire-resistant material of the present invention is a fire-resistant sheet for battery pack containing a sheet of the thermally expandable fire-resistant material for battery pack. In this case, the thickness of the fire-resistant material is, for example, 5,000 µm or smaller, preferably 2 to 4,000 µm, more preferably 10 to 3,000 µm, still more preferably 20 to 1,000 µm and further still more preferably 35 to 600 µm. Here, the "thickness" of the fire-resistant material in the present specification refers to an average thickness of 3 points in the width direction of the fire-resistant material.

The thickness of the fire-resistant sheet for battery pack of the lower limit value or larger can easily impart suitable fire resistance and thermal insulation performance to the fire-resistant material. On the other hand, the thickness thereof of the upper limit value or smaller can prevent the thickness of the fire-resistant material from becoming larger than necessary, thereby achieving the weight reduction of the battery pack.

### (Methods for producing the thermally expandable fire-resistant material for battery pack and the fire-resistant sheet for battery pack)

The fire-resistant material of the present invention can be fabricated by preparing a fire-resistant resin composition and applying and drying the fire-resistant resin composition on a desired region of a battery pack inner surface. Further, in the case of the fire-resistant sheet for battery pack, the fire-resistant sheet can be produced by forming the fire-resistant resin composition into a sheet shape.

The fire-resistant resin composition is obtained by mixing the resin, the thermally expandable compound, and optional components, such as the solid flame retardant, the endothermic agent, the inorganic filler and the plasticizer, to be blended according to needs, by using a well-known mixing apparatus such as a Banbury mixer, a kneader mixer, a kneading roll, a mortar machine or a planetary stirring machine.

A method for forming the fire-resistant resin composition into the fire-resistant sheet for battery pack specifically includes extrusion, pressing and injection molding; and among these, extrusion is preferable and the fire-resistant sheet for battery pack can be formed by using a single-screw extruding machine, a twin-screw extruding machine, an injection molding machine or the like.

In the case of using a thermosetting resin as the resin, after the fire-resistant resin composition is formed into a sheet shape, the resin component may be cured.

The fire-resistant material can be produced suitably also by a method for production by applying a diluted solution of the fire-resistant resin composition to a release sheet or the like, and then drying the solution. A resin to be used for this production method may suitably be selected from the above-mentioned resins, but is preferably at least one selected from the group consisting of polyvinyl acetal resins and acrylic resins. A solvent to be used in diluting the fire-resistant resin composition is not especially limited, but includes aliphatic hydrocarbon solvents such as n-pentane, n-hexane, n-heptane and cyclohexane, aromatic hydrocarbon solvents such as toluene, ester solvents such as ethyl acetate and n-butyl acetate, ketone solvents such as acetone and methyl ethyl ketone (MEK), and alcohol solvents such as ethanol, isopropyl alcohol and butanol.

The diluted solution of the fire-resistant resin composition is usually a slurry made by dissolving the resin in the solvent and dispersing the solid flame retardant, the endothermic agent and the inorganic filler to be blended according to needs in a solvent. In the case of preparing the slurry, for example, first, powders or particles of the thermally expandable compound and the solid flame retardant, the endothermic agent, the inorganic filler and the like to be optionally blended are stirred by a dispersion mixer such as a bead mill to thereby fabricate a dispersion liquid. At this time, the solvent may previously contain a dispersant blended therein.

Thereafter, a resin solution in which the resin is previously dissolved in a solvent, and other components to be added according to needs may be added to the dispersion liquid, and further stirred by the dispersion mixer to thereby fabricate the diluted solution of the fire-resistant resin composition.

The solid content concentration of the diluted solution of the fire-resistant resin composition is, for example, 30 to 70% by mass, preferably 35 to 65% by mass and more preferably 40 to 60% by mass. When the solid content concentration is the lower limit value or higher, the fire-resistant material can be formed efficiently. On the other hand, the solid content concentration of the upper limit value or lower makes it easy to dissolve the resin in the solvent and disperse the endothermic agent in the solvent.

The fire-resistant sheet for battery pack of the present invention may be used as a simple sheet composed of the fire-resistant material, or may be made to be a laminated fire-resistant sheet for battery pack in which another layer is laminated on the sheet composed of the fire-resistant material. The laminated fire-resistant sheet for battery pack may have, for example, a pressure-sensitive adhesive material as a layer other than the sheet composed of the fire-resistant material. In this case, the laminated fire-resistant sheet for battery pack preferably has, for example, a sheet composed of the fire-resistant material, and a pressure-sensitive adhesive material provided on at least one surface of the sheet. The laminated fire-resistant sheet for battery pack having the pressure-sensitive adhesive material can be laminated on a battery
pack through the pressure-sensitive adhesive material.

The pressure-sensitive adhesive material is a member capable of pressure-sensitively adhering the laminated fire-resistant sheet for battery pack to another member, and may be composed of a pressure-sensitive adhesive layer, or may be a double-sided pressure-sensitive adhesive tape in which a pressure-sensitive adhesive layer is provided on each of both surfaces of a base material, but it is preferable that the pressure-sensitive adhesive material is composed of the pressure-sensitive adhesive layer. The double-sided pressure-sensitive adhesive tape ends in constituting a pressure-sensitive adhesive material by laminating the one pressure-sensitive adhesive layer on the fire-resistant material.

A pressure-sensitive adhesive constituting the pressure-sensitive adhesive layer is not especially limited, and examples thereof include acrylic pressure-sensitive adhesives, urethane-based pressure-sensitive adhesives and rubber-based pressure-sensitive adhesives, but are not especially limited thereto. The thickness of the pressure-sensitive adhesive material is not especially limited, but is, for example, 3 to 500 µm and preferably 10 to 200 µm.

As the base material to be used for the double-sided pressure-sensitive adhesive tape, there may be used a well-known base material to be used for double-sided pressure-sensitive adhesive tapes, such as resin film or nonwoven fabric.

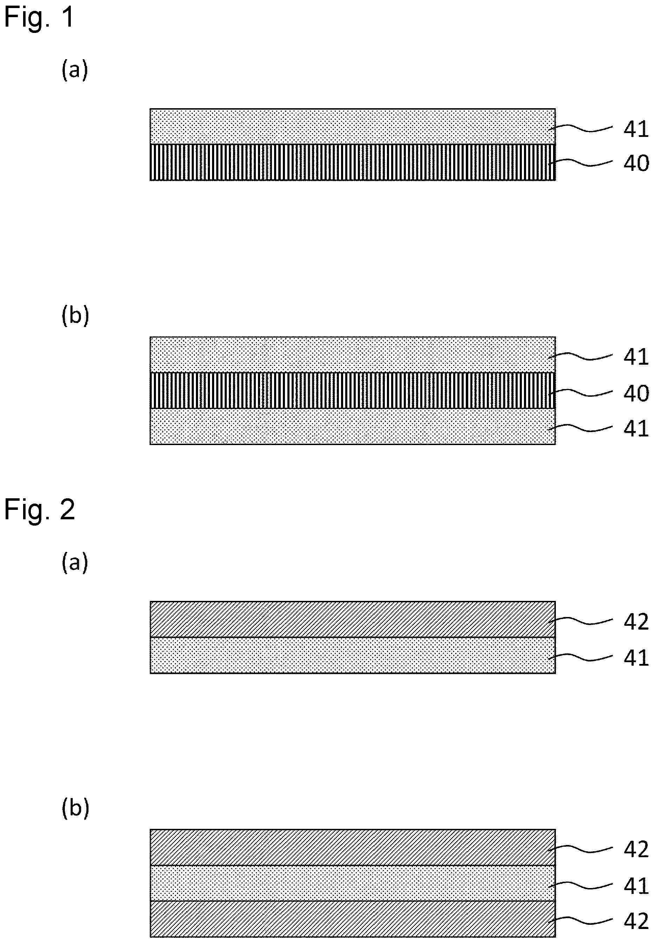

The laminated fire-resistant sheet for battery pack of the present invention may be a laminate having a base material, and a sheet composed of the fire-resistant material and provided on at least one surface of the base material. In the case of using a base material, as shown in Fig. 1(a), a sheet 41 composed of the fire-resistant material may be provided only on one surface of a base material 40, or, as shown in Fig. 1(b), may be provided on both surfaces of a base material 40. The sheet composed of the fire-resistant material may be laminated directly on the base material, or may be laminated on the base material through a primer layer, an adhesive layer and the like, in the range of not impairing the advantageous effects of the present invention; but direct lamination is preferable.

Here, the base material may be a flammable layer, a quasi-nonflammable layer or a nonflammable layer. The thickness of the base material is not especially limited, but is, for example, 5 µm to 1 mm. The base material is formed of a resin, a metal, an inorganic material other than metal, or a composite thereof. The form of the base material may be a film, a foil or the like, or may also be a cloth, a mesh or the like. Therefore, examples thereof include resin films, metal foils, metal cloths, metal meshes, organic fiber cloths, and cloths of inorganic materials other than metal (inorganic fiber cloths). The inorganic fiber cloths include glass cloths.

The above-mentioned laminated fire-resistant sheet for battery pack having the base material and the sheet composed of the fire-resistant material can be produced by subjecting the fire-resistant resin composition to extrusion or the like to form the sheet composed of the fire-resistant material on one surface of or both surfaces of the base material. Alternatively, the laminated fire-resistant sheet for battery pack may be produced by applying and drying the diluted solution being the fire-resistant resin composition diluted with the solvent on one surface of or both surfaces of the base material to form the fire-resistant material on the one surface of or both the surfaces of the base material. The type of solvent to be used in the diluted solution, the solid content concentration of the diluted solution, and the like are as described above.

Further, the laminated fire-resistant sheet for battery pack may be produced by laminating, by compression bonding or the like, the sheet composed of the fire-resistant material previously formed, on one surface of or both surfaces of the base material.

In the case where the sheet made of the fire-resistant material is formed on both surfaces of the base material, the sheets made of the fire-resistant material may be formed simultaneously on both surfaces, or may be formed successively on each surface.

The laminated fire-resistant sheet for battery pack may be provided further with the pressure-sensitive adhesive material on one surface thereof. In the case where the sheet composed of the fire-resistant material is provided only on one surface of the base material, the pressure-sensitive adhesive material may be provided on the other surface of the base material, or may be provided on the sheet composed of the fire-resistant material, but is provided preferably on the sheet composed of the fire-resistant material. When the pressure-sensitive adhesive material is provided on the fire-resistant material, in the case where the laminated fire-resistant sheet for battery pack is laminated on a battery pack through the pressure-sensitive adhesive material, the sheet composed of the fire-resistant material and the base material end in being disposed in this order from the battery pack. Such disposition easily enhances the thermal insulation performance. Here, the specific structure of the pressure-sensitive adhesive material is as described above.

The laminated fire-resistant sheet for battery pack of the present invention may be provided, in addition to the sheet composed of the fire-resistant material, with an electroconductive layer. The electroconductive layer can impart the electromagnetic wave shielding property to the laminated fire-resistant sheet for battery pack. An electroconductive layer 42, as shown in Fig. 2(a), may be provided only on one surface of a sheet 41 composed of the fire-resistant material, or as shown in Fig. 2(b), may be provided on both surfaces of a sheet 41 composed of the fire-resistant material. The electroconductive layer 42 may be laminated directly on the sheet 41 composed of the fire-resistant material, or may be laminated on the sheet through a primer layer, an adhesive layer and the like, in the range of not impairing the advantageous effects of the present invention; but direct lamination is preferable.

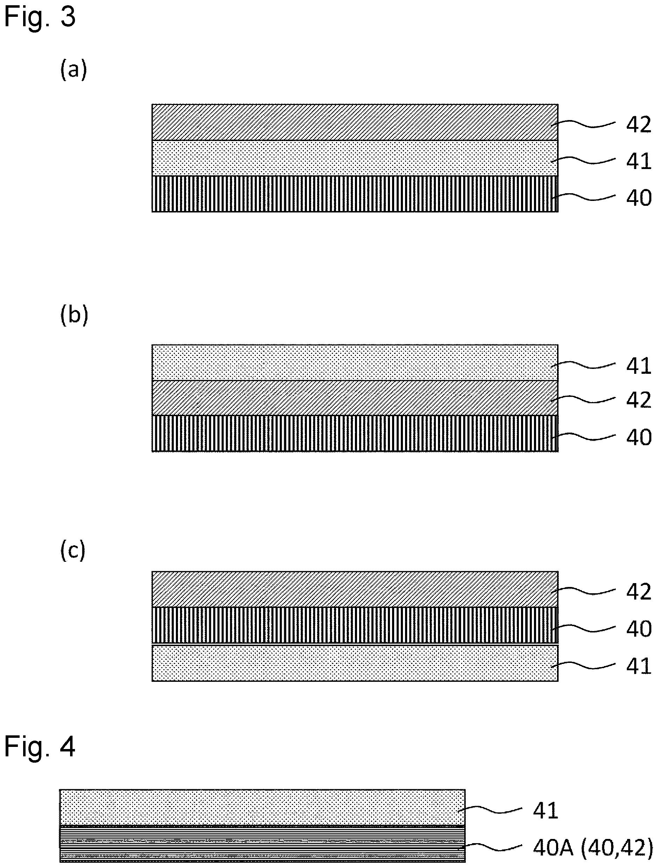

The laminated fire-resistant sheet for battery pack having an electroconductive layer of the present invention may be provided further with a base material. The laminated fire-resistant sheet for battery pack provided with the electroconductive layer and the base material can have, for example, a structure in which, as shown in Fig. 3(a), a sheet 41 composed of the fire-resistant material and an electroconductive layer 42 are disposed in order on a base material 40. Alternatively, as shown in Fig. 3(b), that can have a structure in which an electroconductive layer 42 and a sheet 41 composed of the fire-resistant material are disposed in order on a base material 40. Further as shown in Fig. 3(c), that can have s structure in which an electroconductive layer 42 is provided on one surface of a base material 40 and a sheet 41 composed of the fire-resistant material is provided on the other surface of the base material 40.

As shown in Figs. 3(a) to (c), in the case where the laminated fire-resistant sheet for battery pack has a structure having the base material 40, the sheet 41 composed of the fire-resistant material, and the electroconductive layer 42, it is preferable that the base material 40 is formed of a resin film or an inorganic material other than metal.

As shown in Figs. 3(b) and (c), in the case where the laminated fire-resistant sheet for battery pack has a structure in which the electroconductive layer 42 is laminated on the base material 40, the structure may be a composite of the base material 40 with the electroconductive layer 42, which composite is, for example, preferably an aluminum glass cloth being a composite material of an inorganic fiber cloth with a metal.

Further, in the laminated fire-resistant sheet for battery pack having the base material 40 and the sheet 41 composed of the fire-resistant material, in the case where the base material 40 has electroconductivity, as shown in Fig. 4, the base material 40 itself can be regarded as an electroconductive base material 40A doubling as an electroconductive layer 42. The electroconductive base material 40A can impart the electromagnetic wave shielding property to the laminated fire-resistant sheet for battery pack. Examples of the electroconductive base material 40A include metal foils, metal cloths and metal meshes, and among these, aluminum foils and copper foils are preferable.

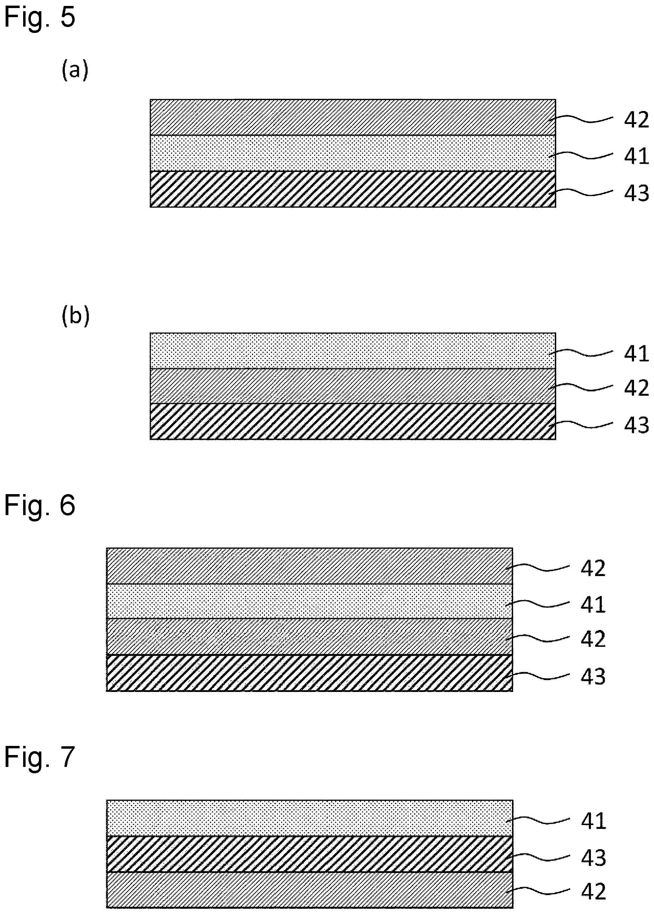

The laminated fire-resistant sheet for battery pack having the electroconductive layer of the present invention may be provided further with a base layer. The base layer constitutes a part of an on-vehicle battery pack, such as a lid, and since the base layer is similar to a base layer in an on-vehicle battery pack described later, details thereof will be omitted. The laminated fire-resistant sheet for battery pack provided with the electroconductive layer and the base layer can have, for example, a structure in which, as shown in Fig. 5(a), a sheet 41 composed of the fire-resistant material and an electroconductive layer 42 are disposed in order on a base layer 43. Alternatively, as shown in Fig. 5(b), that can have s structure in which an electroconductive layer 42 and a sheet 41 composed of the fire-resistant material are disposed in order on a base layer 43.

Further, as shown in Fig. 6, that can have a structure in which an electroconductive layer 42, a sheet 41 composed of the fire-resistant material, and an electroconductive layer 42 are disposed in order on a base layer 43, the structure in which two layers of electroconductive layers 42 are provided. Further, as shown in Fig. 7, that can have a structure in which an electroconductive layer 42 is provided on one surface of a base layer 43 and a sheet 41 composed of the fire-resistant material is provided on the other surface of the base layer 43.

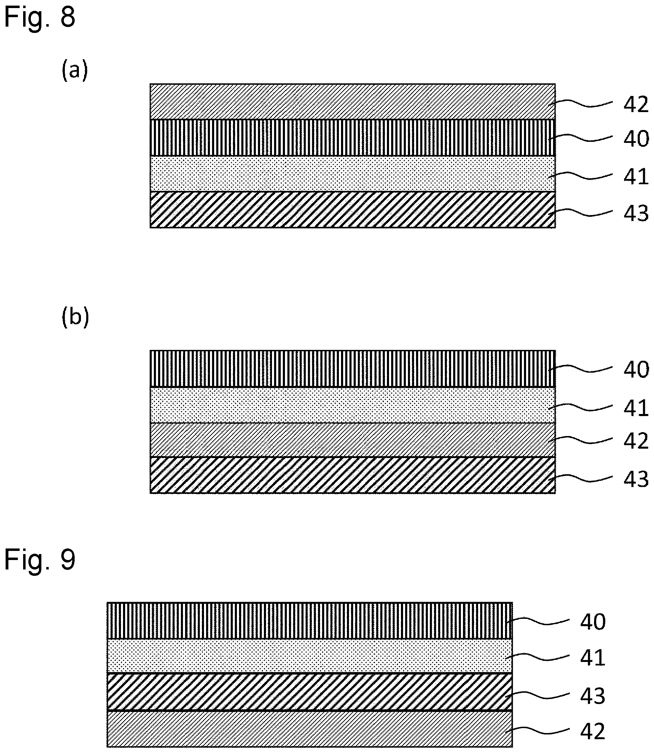

The laminated fire-resistant sheet for battery pack having an electroconductive layer of the present invention may be provided with a base material and a base layer concurrently. The laminated fire-resistant sheet for battery pack provided with the electroconductive layer and the base layer can have, for example, a structure in which, as shown in Fig. 8(a), a sheet 41 composed of the fire-resistant material, a base material 40, and an electroconductive layer 42 are disposed in order on a base layer 43. Alternatively, as shown in Fig. 8(b), that can have a structure in which an electroconductive layer 42, a sheet 41 composed of the fire-resistant material, and a base material 40 are disposed in order on a base layer 43.

Further as shown in Fig. 9, that can have a structure in which an electroconductive layer 42 is provided on one surface of a base layer 43 and a sheet 41 composed of the fire-resistant material and a base material 40 are disposed in order on the other surface of the base layer 43.

Examples of a method of forming the electroconductive layer 42 include means in which a sheet-shape electroconductive layer of a metal foil such as an aluminum foil or a copper foil, an electroconductive sheet containing an electroconductive filler such as a metal filler or a carbon-based filler, or a metal cloth is laminated on any layer constituting the laminated fire-resistant sheet for battery pack. A method of forming the electroconductive layer 42 further includes means in which a vapor deposition material such as aluminum, copper or nickel is heated and evaporated and deposited on any layer constituting the laminated fire-resistant sheet for battery pack. A method of forming the electroconductive layer 42 further includes means in which an electroconductive coating material in which silver, copper, nickel or the like is made into a powder and to be contained in a coating material is sided on any layer constituting the laminated fire-resistant sheet for battery pack.

The thickness of the electroconductive layer is preferably 0.1 to 1,000 µm, more preferably 0.2 to 500 µm and still more preferably 1 to 250 µm. When the thickness of the electroconductive layer is in the above range, the electroconductiveness can be imparted, whereby a good electromagnetic wave shielding property can be obtained.

The material of the electroconductive layer is not especially limited, and examples thereof include gold, silver, copper, nickel, aluminum, iron, tin, lead, platinum, lithium, potassium, rubidium, calcium, barium, titanium, chromium, manganese, cobalt, zinc, molybdenum, magnesium, vanadium, tantalum, alloys thereof, and alloys such as stainless steel, permalloy, aluminum alloys, bronze, brass, monel, invar, elinvar and inconel.

### [On-vehicle battery pack]

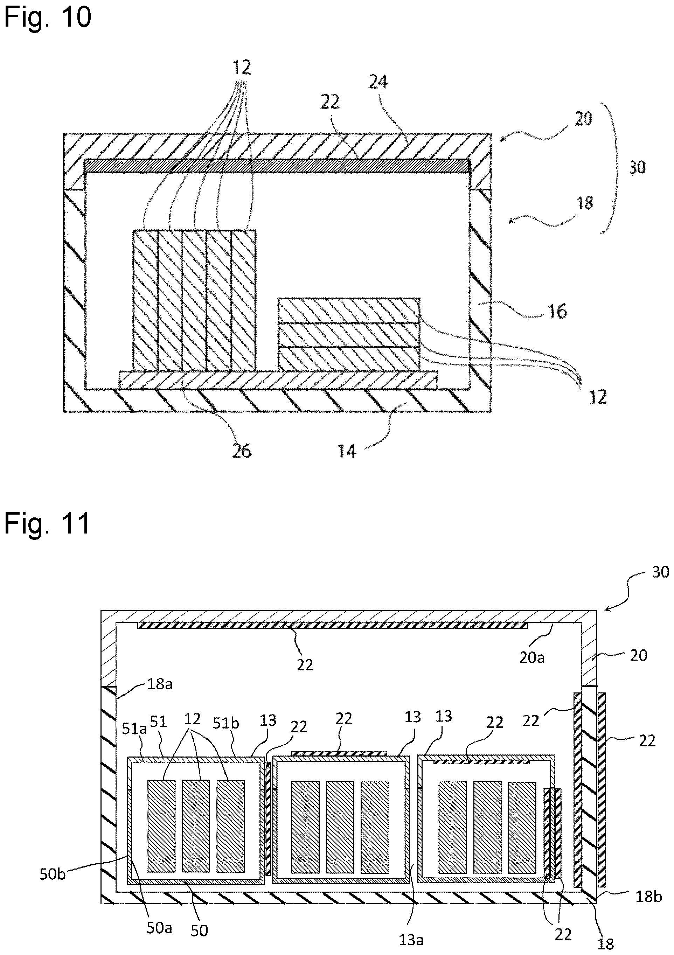

An on-vehicle battery pack according to one embodiment of the present invention is illustrated in Fig. 10.

As shown in Fig. 10, an on-vehicle battery pack 30 has a battery cell-housing part 18 having a bottom plate 14 having a plurality of battery cells mounted thereon and a side plate 16 standing on the periphery of the bottom plate 14, and a lid part 20 provided on the upper end of the side plate 16 of the battery cell-housing part 18 so as to face the bottom plate 14. The lid part 20 has a thermally expandable fire-resistant material layer 22 and a base layer 24 from the side near to the bottom plate 14. The thermally expandable fire-resistant material layer 22 is composed of the thermally expandable fire-resistant material for battery pack of the present invention or the fire-resistant sheet for battery pack of the present invention. Between the plurality of battery cells 12 and the bottom plate 14, an optional heat-dissipating material 26 is provided in some cases.

Here, the on-vehicle battery pack usually refers to the one in the state that a plurality of battery cells are housed therein, but in the present invention, also the one in the state before the plurality of battery cells are housed therein is called an on-vehicle battery pack.

As shown in Fig. 10, since the thermally expandable fire-resistant material layer is formed on the inner side of the lid part of the battery pack, when the battery cells ignite, the thermally expandable fire-resistant material layer expands by heat of the ignition and exhibits already-mentioned fire resistance, and makes it difficult for heat of the battery whose temperature has been abnormally raised to be transferred to the outer surface of the battery pack, giving good thermal insulation properties.

In the present embodiment, it is preferable that the thermally expandable fire-resistant material layer is provided on the inner side of the lid part to have a highest temperature in the ignition and provided at least on a region covering the upper surfaces of the battery cells in the inner side of the lid part; it is more preferable that the layer is provided on a region facing the bottom plate in the inner side of the lid part; and it is more preferable that the layer is provided on the entire surface of the inner side.

Further from the viewpoint of more enhancing the fire resistance and the thermal insulation properties, it is preferable that the thermally expandable fire-resistant material layer is provided at least on either of the side surface and bottom surface of the battery pack.

An on-vehicle battery pack according to another embodiment of the present invention is illustrated in Fig. 11.

As shown in Fig. 11, an on-vehicle battery pack 30 is constituted of a pack case composed of a battery cell-housing part 18 and a lid part 20 provided so as to tightly close the battery cell-housing part 18, and a plurality of battery modules 13 housed in the pack case.

The battery module 13 is constituted of a module case composed of a module housing part 50 and a module lid part 51 provided so as to tightly close the module housing part 50, and a plurality of battery cells 12 housed in the module case.

In the case of using the thermally expandable fire-resistant material layers 22 of the present invention for an on-vehicle battery pack, the thermally expandable fire-resistant material layers can be used by being laminated on the rear side 20a of the lid part 20 of the battery pack, the inner side surface 18a of the battery cell-housing part 18, the outer side surface 18b of the battery cell-housing part 18, and the like.

In the case of using the thermally expandable fire-resistant material layers 22 of the present invention for an on-vehicle battery pack, from the viewpoint of more enhancing the fire resistance and the thermal insulation properties, the thermally expandable fire-resistant material layers may be used by being laminated on the rear side 51a of the module lid part 51 of the battery module 13, the front side 51b of the module lid part 51, the inner side surface 50a of the module housing part 50, the outer side surface of the module housing part 50, and the like, and may be used by being provided between the adjacent battery modules 13, 13a, and the like.

The thermally expandable fire-resistant material layer 22 is preferably provided at any one or two or more positions described above.

From the viewpoint of better exhibiting the fire resistance and the thermal insulation properties, the thickness of the thermally expandable fire-resistant material layer is preferably 5 mm or smaller, and in consideration of the lightweight property, more preferably 2 mm or smaller. Further from the viewpoint of better exhibiting the fire resistance and the thermal insulation properties, the thickness is preferably 0.2 mm or larger and more preferably 0.5 mm or larger.

With regard to the base layer in the on-vehicle battery pack of the present invention, that is, the bottom plate, the side plate, and the lid before the installation of the thermally expandable fire-resistant material layer, it is preferable, from the viewpoint of the weight reduction, that the base layer is either one of a metal layer and a resin layer having a thickness of 0.2 to 5.0 mm.

A metal in the metal layer includes iron, aluminum, gold, silver, copper, brass, stainless steel, carbon steel, titanium, lead and alloys containing at least one thereof; and from the viewpoint of the lightweight property and the processability, aluminum and aluminum alloys are preferable. The thickness is more preferably 0.5 to 3 mm.

A resin in the resin layer includes the thermoplastic resins, thermosetting resins and elastomer resins cited in already mentioned examples of the fire-resistant material, and fiber-reinforced resins (for example, glass fiber-reinforced resins and carbon fiber-reinforced resins). The thickness of the resin layer is preferably 0.5 to 4 mm and more preferably 1 to 3 mm.

Here, the battery cell will be described.

The battery cell refers to a constitutional unit of a battery in which a positive electrode material, a negative electrode material, a separator, a positive electrode terminal, a negative electrode terminal and the like are housed in an outer package member. The battery cell is classified, according to the shape of the cell, into cylindrical, rectangular and laminated forms.

In the case where the battery cell is a cylindrical one, the battery cell refers to a constitutional unit of a battery in which a positive electrode material, a negative electrode material, a separator, a positive electrode terminal, a negative electrode terminal, an insulating material, a safety valve, a gasket, a positive electrode cap and the like are housed in an outer package can. On the other hand, in the case where the battery cell is a rectangular one, the battery cell refers to a constitutional unit of a battery in which a positive electrode material, a negative electrode material, a separator, a positive electrode terminal, a negative electrode terminal, an insulating material, a safety valve and the like are housed in an outer package can. In the case where the battery cell is in a laminated form, the battery cell refers to a constitutional unit of a battery in which a positive electrode material, a negative electrode material, a separator, a positive electrode terminal, a negative electrode terminal and the like are housed in an outer package film. In the laminated battery cell, between two sheets of outer package film, or between a folded sheet of outer package film, in which one sheet of the outer package film is, for example, doubly folded, there are disposed the positive electrode material, the negative electrode material, the separator, the positive electrode terminal, the negative electrode terminal and the like, and the outer peripheral parts of the outer package film are compression bonded by heat seal.

The battery cell is secondary batteries such as lithium ion batteries, lithium ion polymer batteries, nickel·hydrogen batteries, lithium·sulfur batteries, nickel·cadmium batteries, nickel-iron batteries, nickel·zinc batteries, sodium·sulfur batteries, lead batteries and air batteries, and among these, lithium ion batteries are preferable.

In the present invention, on the surface of the battery cell, the already mentioned fire-resistant material or fire-resistant sheet for battery pack of the present invention may be provided. The fire-resistant material or the fire-resistant sheet for battery pack is usually disposed on the surface of the battery cell, and is utilized as an outer package material like an outer package can or an outer package film.

The fire-resistant material or the fire-resistant sheet for battery pack is preferably provided on any surface of the battery cell, but in any case, it is preferable that the fire-resistant material covers most of the surface (for example, 50% or larger of the surface area, more preferably 70% or larger) of the battery cell. Due to that the fire-resistant material covers most of the surface of the battery cell, it becomes easy for the fire-resistant material to quickly insulate heat against the ignition of the battery cell.

The battery cell has a safety valve in many cases, and in the battery cell having a safety valve, also in the case of using either of the fire-resistant material and the fire-resistant sheet for battery pack, it is preferable that the fire-resistant material is provided so as to cover the safety valve. At this time, the fire-resistant material needs to cover so as not to tightly close the safety valve, in order to guarantee the function of the safety valve. Further in the case of the laminated battery cell, it is preferable that the fire-resistant material is provided so as to cover the heat sealed portion which has been compression bonded by heat seal.

Since the battery cell ignites from the safety valve or the heat sealed portion in many cases, by covering these with the fire-resistant material, it becomes easy for the fire-resistant material to more effectively insulate heat from the ignition of the battery cell.

Further in the case where the fire-resistant material covers most of the surface of the battery cell and the battery cell has the safety valve or the heat sealed portion, it is more preferable that the fire-resistant material is disposed so as to cover also the safety valve or heat sealed portion. It is preferable that the fire-resistant material or the fire-resistant sheet for battery pack is disposed so as to wind on the battery cell.

It is preferable that the battery pack as described above is provided on a vehicle body frame, which makes a vehicle body bottom framework. The vehicle body frame is equipped, for example, with a pair of side members extended in the vehicle longitudinal direction and a plurality of cross members extended in the vehicle width direction (side direction).

Further, it is preferable that the battery pack has a cooling structure on its side plate or bottom plate. For example, it is preferable that in the lower part of the housing part, an air inlet is formed on one side surface composed of the side plate, and an air outlet is formed on one side surface composed of the side plate on the opposite side to the air inlet. It is preferable that an air blower equipped with a fan is connected to the air outlet. When the fan is driven, cooling air is taken in the battery pack from the air inlet. The cooling air is passed through in the battery pack and drafted out from the air outlet. Thereby, the battery pack interior can be cooled.

### Examples

Hereinafter, the present invention will be described specifically by way of Examples, but the present invention is not limited thereto.

Measurement methods and evaluation methods of physical properties were as follows.

### <Expansion ratio of a fire-resistant sheet>

A fire-resistant material was cut into 100 mm in length and 100 mm in width with a cutter, placed on a bottom surface of a stainless steel-made holder (101 mm square, 80 mm in height), and fed in an electric furnace and heated at 60°C for 3 min. The thickness of an expansion residue after the heating was divided by the thickness of the fire-resistant material before the heating to calculate the expansion ratio. The thickness of the expansion residue and the thickness of the fire-resistant material were measured by 3-point measurement with calipers and respective average values were calculated.

### <Fire resistance test>

A fire-resistant material was cut into 100 mm square; and a flame was applied to one surface of the fire-resistant material by using a cassette gas torch burner of Iwatani Corp. Then, the temperature of the rear surface side of the fire-resistant material after 5 min was evaluated. Here, an instrument used in the temperature evaluation was T630sc of FLIR Systems, Inc.

The case of 300°C or lower was evaluated as "AA"; the case of higher than 300°C and 400°C or lower, as "A"; the case of higher than 400°C and 500°C or lower, as "B"; and the case where the temperature was higher than 500°C or the fire-resistant material was penetrated, as "C". The results are shown in Table 1.

### <Sheet formability>

The case where a fire-resistant material obtained in each of Examples and Comparative Examples could be wound up on a takeup roll and could make a roll body was evaluated as "A"; and the case where the fire-resistant material could not be wound up on the takeup roll and could not make a roll body, as "B". The results are shown in Table 1.

### <Tensile strength>

The tensile elastic modulus at normal temperature (23°C) of a fire-resistant material was measured according to JIS 7113 by an AUTOGRAPH (manufactured by Shimadzu Corporation, AGS-J), and judged as follows.
AA: the tensile elastic modulus was 100 MPa or higher
A: the tensile elastic modulus was 50 MPa or higher and lower than 100 MPa
B: the tensile elastic modulus was 1 MPa or higher and lower than 50 MPa
C: the tensile elastic modulus was lower than 1 MPa

### <Measurement method of the initial thermal decomposition temperature of an endothermic agent>

The initial thermal decomposition temperature was measured by using a thermogravimetric differential thermal analyzer (TG-DTA). The measurement condition was: from room temperature to 1,000°C, a temperature-rise rate of 4°C/min, and a weight of an endothermic agent of 10 mg. The temperature at which the weight started to decrease in an obtained TG curve was taken as an initial thermal decomposition temperature of the endothermic agent.

### <Measurement method of the endothermic quantity of an endothermic agent>

The endothermic quantity was measured by using a thermogravimetric differential thermal analyzer (TG-DTA). The measurement condition was: from room temperature to 1,000°C, a temperature-rise rate of 4°C/min, and a weight of an endothermic agent of 10 mg. The endothermic quantity (area of a downward peak part) was calculated from an obtained DTA curve.

### <Measurement method of the average particle diameter>

The average particle diameter of each component was measured by laser diffractometry. The particle diameter at a cumulative value of 50% in a particle size distribution determined by a particle size distribution analyzer, such as a laser diffraction/scattering particle size distribution analyzer, was taken as an average particle diameter.

### <Electromagnetic wave shielding property>

The electromagnetic wave shielding property was measured according to KEC method by using an electric field shield measurement device (manufactured by Microwave Factory Co., Ltd., trade name: "KEC Method Shielding Effect Measurement Device"). Specifically, a flat plate specimen of 150 mm × 150 mm was fabricated and the electromagnetic wave shielding property at a frequencies of 0.1 to 1,000 MHz was judged as follows.
AA: 30 dB or higher
A: 20 dB or higher and lower than 30 dB
B: 5 dB or higher and lower than 20 dB
C: lower than 5 dB

The components in Tables 1 to 3 were as follows.

### <Resins>

PVB1: a polyvinyl butyral resin, degree of polymerization: 800, degree of acetalization: 69% by mol, content of acetyl group: 1% by mol, content of hydroxide group: 30% by mol, viscosity of 10 mass%-resin ethanol/toluene solution: 142 mPa·s
PVB2: a polyvinyl butyral resin, degree of polymerization: 320, degree of acetalization: 75% by mol, content of acetyl group: 3% by mol, content of hydroxide group: 22% by mol, viscosity of 10 mass%-resin ethanol/toluene solution: 21 mPa·s
PVB3: a polyvinyl butyral resin, degree of polymerization: 1,100, degree of acetalization: 64% by mol, content of acetyl group: 1% by mol, content of hydroxide group: 35% by mol, viscosity of 10 mass%-resin ethanol/toluene solution: 280 mPa·s
EVA: Evaflex EV450, Mitsui DuPont Polychemical Co., Ltd., melt flow rate: 15 g/10 min
Acrylic resin: a homopolymer of isobutyl methacrylate, weight-average molecular weight: 100,000, glass transition temperature (Tg): 50°C
Epoxy resin: a bisphenol F epoxy resin (product name: "E-807", manufactured by Mitsubishi Chemical Corp., 53 parts by mass), an amine-based curing agent (product name: "FL-079", manufactured by Mitsubishi Chemical Corp., 47 parts by mass)

### <Thermally expandable compounds>

Thermally expandable graphite (1): initial expansion temperature: 120°C, degree of expansion: 200 ml/g, product name: "EPX-50S120N", manufactured by Fuji Graphite Industry Co., Ltd.
Thermally expandable graphite (2): initial expansion temperature: 160°C, degree of expansion: 200 ml/g, product name: "EPX-50S160", manufactured by Fuji Graphite Industry Co., Ltd.
Aluminum phosphite: initial expansion temperature: 400°C, degree of expansion: 40 ml/g, product name: "APA100", manufactured by Taihei Chemical Industrial Co., Ltd.
Thermally expandable microcapsule: Advancell EMH204, manufactured by Sekisui Chemical Co., Ltd.

### <Other solid flame retardants>

Ammonium polyphosphate: product name: "AP422", manufactured by Clariant International Ltd., average particle diameter: 15 µm
Low-melting glass: manufactured by Nihon Horo Tuyaku Co., Ltd., softening temperature: 380°C

### <Endothermic agents>

Aluminum hydroxide: product name: "BF013", manufactured by Nippon Light Metal Co., Ltd., average particle diameter: 1 µm, initial thermal decomposition temperature: 200°C, endothermic quantity: 1,000 J/g
Magnesium hydroxide: product name: "Kisuma 5A", manufactured by Kyowa Chemical Industry Co., Ltd., average particle diameter: 0.9 µm, initial thermal decomposition temperature: 280°C, endothermic quantity: 1,350 J/g

### <Inorganic filler>

Calcium carbonate: product name: "Whiton BF-300", manufactured by Bihoku Funka Kogyo Co., Ltd., average particle diameter: 8 µm

### <Examples 1 to 16, 18 to 22 and 23 to 26, and Comparative Examples 1 to 3>

In each of the Examples, components other than a resin were added to a mixed solvent of ethanol and toluene (mass ratio 1 : 1) according to a formulation indicated in Table 1 to disperse the components in the solvent to thereby obtain a dispersion liquid. The resin dissolved in a mixed solvent of ethanol and toluene (mass ratio 1 : 1) was added to the dispersion liquid according to a formulation indicated in Table 1 to thereby obtain a diluted solution of a fire-resistant resin composition having a solid content concentration of 10% by mass. The obtained diluted solution of the fire-resistant resin composition was applied on one surface of a release sheet (PET film, manufactured by Lintec Corp.), and dried at 120°C for 10 min to thereby obtain a sheet-shape fire-resistant material formed on the release sheet. Then, the fire-resistant material was peeled off the release sheet to thereby obtain a simple fire-resistant material (fire-resistant sheet). The thickness of the fire-resistant sheet was 1.0 mm.

### <Example 17>

A fire-resistant resin composition obtained by feeding the components indicated in Table 1 to a single screw extruder and kneading the resultant was extruded at 120°C to thereby obtain a sheet-shape fire-resistant material of 1.0 mm in thickness.

### <Example 27>

Components other than a resin were added to a mixed solvent of ethanol and toluene (mass ratio 1 : 1) according to a formulation indicated in Table 3 to disperse the components in the solvent to thereby obtain a dispersion liquid. The resin dissolved in a mixed solvent of ethanol and toluene (mass ratio 1 : 1) was added to the dispersion liquid according to a formulation indicated in Table 3 to thereby obtain a diluted solution of a fire-resistant resin composition having a solid content concentration of 10% by mass. The obtained diluted solution of the fire-resistant resin composition was applied on one surface of a release sheet (PET film, manufactured by Lintec Corp.), and dried at 120°C for 10 min to thereby obtain a sheet-shape fire-resistant material formed on the release sheet. Then, the fire-resistant material was peeled off the release sheet to thereby obtain a simple fire-resistant material (fire-resistant sheet). The thickness of the fire-resistant sheet was 1.0 mm. Then, an aluminum foil of 12 µm in thickness having an acrylic adhesive material applied on one surface thereof was laminated on one surface of the obtained fire-resistant sheet to thereby obtain a fire-resistant sheet having the electroconductive base material laminated thereon.

### <Examples 28, 30 and 33>

In each Example, a fire-resistant resin composition obtained by feeding components indicated in Table 3 to a single-screw extruding machine and kneading the resultant was extruded at 120°C to thereby obtain a sheet-shape fire-resistant material of 1.0 mm in thickness. Then, an aluminum foil or a copper foil having an acrylic adhesive material applied on one surface thereof was laminated on one surface of the obtained fire-resistant sheet to thereby obtain a fire-resistant sheet having the electroconductive base material laminated thereon.

### <Example 29>

A fire-resistant resin composition obtained by mixing components indicated in Table 3 by a planetary stirrer was pressed at 25°C and thereafter cured at 90°C for 10 hours to thereby obtain a sheet-shape fire-resistant material of 1.0 mm in thickness. Then, an aluminum foil of 60 µm in thickness having an acrylic adhesive material applied on one surface thereof was laminated on one surface of the obtained sheet-shape fire-resistant material to thereby obtain a fire-resistant sheet having the electroconductive base material laminated thereon.

### <Examples 31 and 32>

In each Examples, a fire-resistant resin composition obtained by feeding components indicated in Table 3 to a single-screw extruding machine and kneading the resultant was extruded at 120°C to thereby obtain a sheet-shape fire-resistant material of 1.0 mm in thickness. Then, an aluminum glass cloth having an electroconductive layer and a base material was prepared; and the obtained fire-resistant material was placed on the glass cloth (base material) of the aluminum glass cloth, and further, a release PET was placed on the fire-resistant material, and subjected to heat press at 140°C. Then, the release PET was peeled off to thereby obtain a fire-resistant sheet having the aluminum glass cloth laminated on one surface thereof.

### <Comparative Example 4>

Components other than a resin were added to a mixed solvent of ethanol and toluene (mass ratio 1 : 1) according to a formulation indicated in Table 3 to disperse the components in the solvent to thereby obtain a dispersion liquid. The resin dissolved in a mixed solvent of ethanol and toluene (mass ratio 1 : 1) was added to the dispersion liquid according to a formulation indicated in Table 3 to thereby obtain a diluted solution of a fire-resistant resin composition having a solid content concentration of 10% by mass. The obtained diluted solution of the fire-resistant resin composition was applied on one surface of a release sheet (PET film, manufactured by Lintec Corp.), and dried at 120°C for 10 min to thereby obtain a sheet-shape fire-resistant material formed on the release sheet. The thickness of the fire-resistant sheet was 1.0 mm.

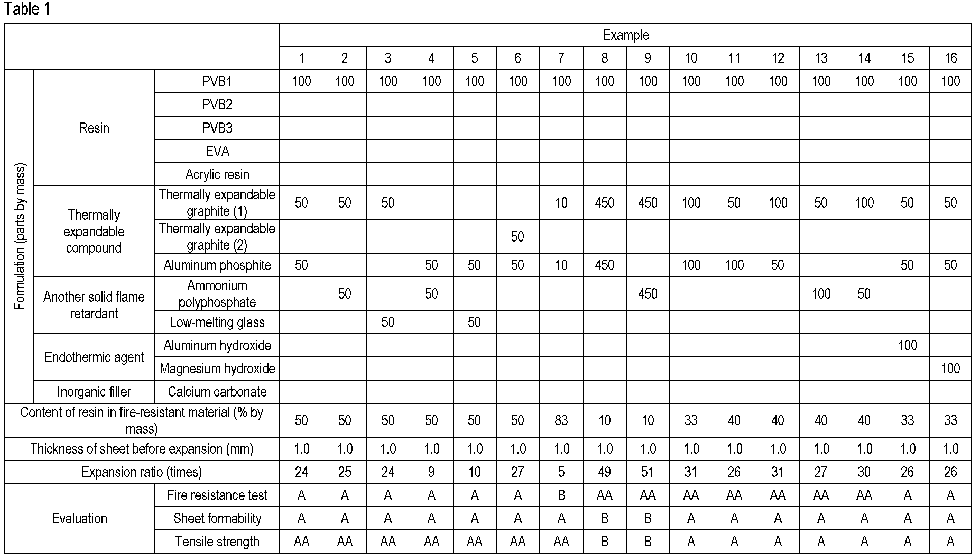

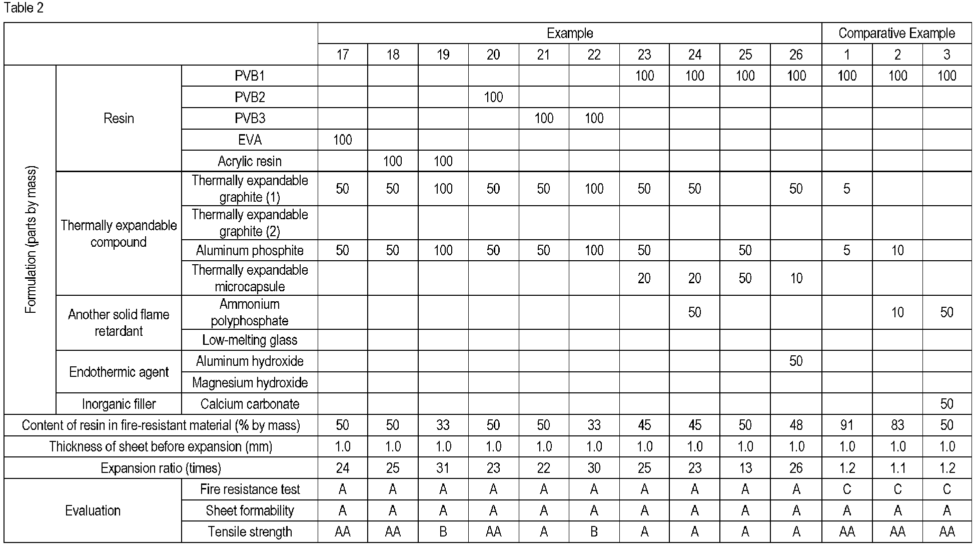

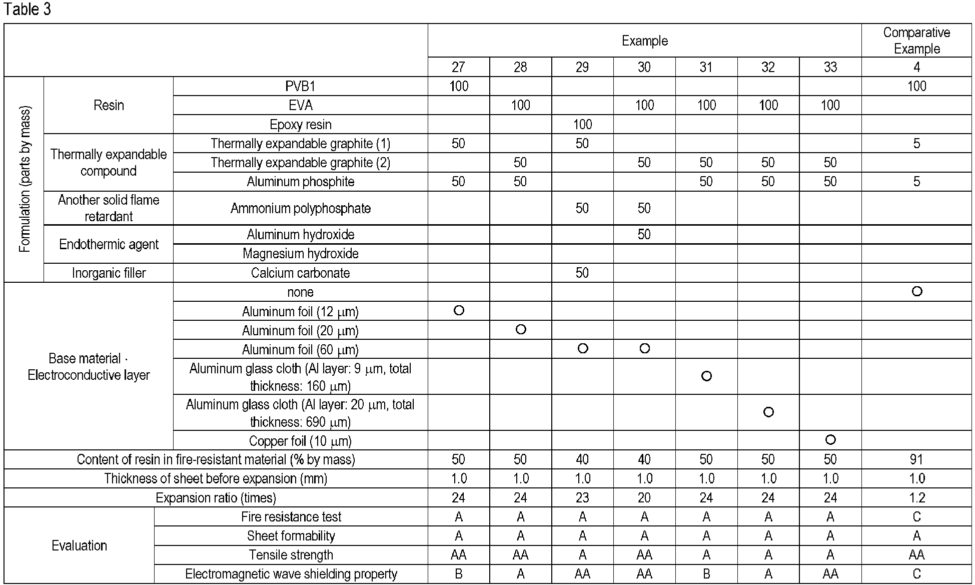

As shown in the above Examples, the fire-resistant material, by being made to contain a thermally expandable compound and to have an expansion ratio of a predetermined value or higher, became good in the fire resistance and the thermal insulation performance.

### Reference Signs List

- 12: Battery cell
- 13: Battery module
- 14: Bottom plate
- 16: Side plate
- 18: Battery cell-housing part
- 20: Lid part
- 22: Thermally expandable fire-resistant material layer
- 24: Base layer
- 26: Heat-dissipating material
- 30: On-vehicle battery pack
- 40: Base material
- 41: Sheet
- 42: Electroconductive layer
- 43: Base layer
- 50: Module housing part
- 51: Module lid part

## Claims

1. A thermally expandable fire-resistant material for battery pack to be used for a battery pack, comprising a resin and a thermally expandable compound, an expansion ratio thereof in a case where the material is heated at 600°C being 2.5 times or more.

2. The thermally expandable fire-resistant material for battery pack according to claim 1, wherein the thermally expandable compound is at least one selected from the group consisting of thermally expandable layered inorganic substances and thermally expandable solid phosphorus compounds.

3. The thermally expandable fire-resistant material for battery pack according to claim 1 or 2, comprising a solid flame retardant other than the thermally expandable compound.

4. The thermally expandable fire-resistant material for battery pack according to any one of claims 1 to 3, wherein the resin is at least one selected from the group consisting of polyvinyl acetal resins, acrylic resins, polyvinyl chloride resins, polyolefin resins and epoxy resins.

5. The thermally expandable fire-resistant material for battery pack according to any one of claims 1 to 4, further comprising an endothermic agent having an initial thermal decomposition temperature of 800°C or lower and an endothermic quantity of 300 J/g or higher.

6. A fire-resistant sheet for battery pack, comprising a sheet of a thermally expandable fire-resistant material for battery pack according to any one of claims 1 to 5.

7. The fire-resistant sheet for battery pack according to claim 6, comprising the sheet of the thermally expandable fire-resistant material for battery pack, and a base material.

8. The fire-resistant sheet for battery pack according to claim 6 or 7, comprising an electroconductive layer.

9. An on-vehicle battery pack, comprising: a battery cell-housing part having a bottom plate having a plurality of battery cells mounted thereon and a side plate standing on the periphery of the bottom plate; and a lid part provided on the upper end of the side plate of the battery cell-housing part so as to face the bottom plate,
the lid part provided with a thermally expandable fire-resistant material layer and a base layer from the side near to the bottom plate; and
the thermally expandable fire-resistant material layer comprising a thermally expandable fire-resistant material for battery pack according to any one of claims 1 to 5 or a fire-resistant sheet for battery pack according to any one of claims 6 to 8.

10. The on-vehicle battery pack according to claim 9, wherein the thermally expandable fire-resistant material layer has a thickness of 5 mm or smaller.

11. The on-vehicle battery pack according to claim 9 or 10, wherein the base layer is either of a metal layer and a resin layer having a thickness of 0.2 to 5.0 mm.
